(19) Europäisches Patentamt

European Patent Office

Office européen des brevets

(11) EP 0 992 344 A1

## (12) EUROPEAN PATENT APPLICATION
published in accordance with Art. 158(3) EPC

(43) Date of publication:
12.04.2000 Bulletin 2000/15

(21) Application number: 99913653.4

(22) Date of filing: 13.04.1999

(51) Int. Cl.7: **B41C 1/10**, B41N 1/14, B41M 1/06

(86) International application number:
PCT/JP99/01966

(87) International publication number:
WO 99/54137 (28.10.1999 Gazette 1999/43)

(84) Designated Contracting States:
DE GB

(30) Priority: 22.04.1998 JP 11222298
22.04.1998 JP 11222998

(71) Applicant:
STAR MICRONICS CO., LTD.
Shizuoka-shi, Shizuoka-ken 422-8654 (JP)

(72) Inventor: SASAKURA, Kouichi
Shizuoka-shi, Shizuoka 422-8654 (JP)

(74) Representative:
Baverstock, Michael George Douglas et al
BOULT WADE TENNANT,
27 Furnival Street
London EC4A 1PQ (GB)

(54) **IMAGE FORMING DEVICE, IMAGE FORMING METHOD, PLATE MAKING METHOD, AND METHOD FOR FORMING SELF-COAGULATING MONOMOLECULAR FILM**

(57)    An image forming apparatus comprises: a conductive substrate; a first compound supplying device for supplying a surface of the substrate with a self-assembling compound; a first energizing device for energizing the substrate, so as to form a self-assembling monomolecular film, thereby yielding an image forming body; a first desorbing device for selectively desorbing at least a part of the self-assembling compound, so as to provide a surface of the image forming body with a desorbed face and an undesorbed face which have wettabilities different from each other; a developing device for supplying the surface of the image forming body with ink; and a transfer device for transferring to a recording medium the ink attached to the surface of the image forming body.

Fig.4

## Description

### Technical Field

The present invention relates to an image forming apparatus, an image forming method, a platemaking method, and a method of forming a self-assembling monomolecular film useful therefor.

### Background Art

Known as conventional printers are electrophotographic printers and mimeograph printers.

In electrophotographic printers, the whole surface of a clean drum is electrically charged by corona discharge, and the electrically charged drum surface is selectively exposed to light. The exposed surface is discharged, whereby a latent image is formed on the drum surface by a charged area and an uncharged area. After the latent image is formed, toner is attached to the drum surface by a developing section, so as to form a visual image. The thus formed visual image is transferred onto a recording medium in a transfer section, and then is fixed to the recording medium by a fixing section.

Since an electrophotographic printer necessitates a process of forming a latent image for each sheet when printing a plurality of sheets, however, there is a limit to increasing the printing speed.

In a mimeograph printer, which is known as a light-duty printer for business use, on the other hand, a thermal head selectively forms holes in a stencil, so as to form a mimeograph. The thus formed mimeograph is wound about a drum, and then ink is supplied to the mimeograph from the inside of the drum, whereby an ink image is formed by the ink passing through the above-mentioned holes. Thereafter, the ink image is transferred to a recording medium in a transfer section.

The mimeograph printer, however, has the following drawbacks. Specifically, the mimeograph wound about the drum has to be discarded after the printing is finished. As a consequence, it is necessary to provide a mechanism for removing the plate material to be discarded from the drum, a site for storing thus removed plate material carrying ink, and a complicated mechanism for taking the plate out of the apparatus. Since ink is attached to the plate to be discarded, the amount of use of ink unnecessarily increases, thereby raising the cost of prints. Further, since no new image can be formed on a mimeograph stencil once it has been prepared, a new mimeograph stencil is necessary for forming a new plate. Thus, it is disadvantageous in that, while the running cost per sheet when copy-printing a large number of sheets is reduced, the running cost per sheet when copy-printing a small number of sheets increases. Also, since processes for discarding the used stencil, forming a new stencil with a plate, winding the plate about a drum, and so forth are necessary for printing a new image, it is disadvantageous in that the apparatus complicates its structure and increases its dimensions.

At the same time, when adsorbed (chemically adsorbed) to a specific substrate surface, a so-called self-assembling compound is arranged substantially regularly on the substrate surface due to the molecular assembling property of the former (the adsorption action due to the adsorptive functional group and the intermolecular mutual actions caused by the groups combined with the adsorptive functional group). Films formed by such an arrangement are referred to as self-assembling monomolecular films or self-assembled monolayers (abbreviated as SAM). Also, thus regularly arranging the self-assembling compound on the substrate surface is referred to as modifying the substrate surface with the self-assembling compound. A phenomenon such as that mentioned above is reported in R.G. Nuzzo et al., J. Am. Chem. Soc., 105 (1983), 4481-4483, from which the above-mentioned phenomenon has been known to occur between specific materials (a substrate and a self-assembling compound).

Generally practiced as a method of forming such a self-assembling compound is a method in which a substrate surface is immersed in a solution of a self-assembling compound, and a monomolecular film is formed on the substrate surface by the self-coagulating (assembling) action of the self-assembling compound alone. In such a film forming method depending solely on the self-coagulating (assembling) action, however, it may take several hours to obtain a sufficient self-assembling monomolecular film, so that there is a limit to shortening the film forming time required for making the wettability of the substrate surface and that of the monomolecular film surface different from each other by forming a substantially uniform self-assembling monomolecular film.

Also, there has been reported a method in which, at the time when a self-assembling compound is adsorbed to a specific substrate surface, the substrate used as an active electrode (anode) and a platinum electrode used as an opposite electrode (cathode) are immersed in a solution of the self-assembling compound, so as to apply a voltage therebetween (Marc D. Porter et al., J. Am. Chem. Soc., 114 (1992), 5860-5862). The conventional method in which the self-assembling monomolecular film is thus formed while a current is flowing from the substrate to the opposite electrode, however, has entailed a drawback that its range of applicability is more limited since an opposite electrode is necessary.

**Disclosure of the Invention**

In view of the above-mentioned problems inherent in the prior art, it is an object of the present invention to provide a novel image forming apparatus and image forming method in which a printing plate can be formed and erased efficiently and reliably in a short time, so that the same printing plate can efficiently be used repeatedly, thereby making it possible to realize high-speed printing, reduce the dimensions of the apparatus, and lower the running cost when copy-printing a small number of sheets; and a method of making such a printing plate for image formation.

Also, it is an object of the present invention to provide a method of forming a self-assembling monomolecular film by which a self-assembling monomolecular film in which a self-assembling compound is uniformly arranged can be obtained efficiently and reliably in a short time.

As a result of diligent studies for achieving the above-mentioned objects, the inventors have found that the objects can be attained when, while a material (i.e., self-assembling compound) which is detachably adsorbed to a substrate surface and is substantially regularly arranged due to intermolecular mutual actions is used as a material for forming an image forming body, the substrate itself is energized at the time when the self-assembling compound is supplied, so as to form a film (i.e., a self-assembling monomolecular film) on the substrate surface, and a printing plate is formed by selectively desorbing at least a part of the self-assembling compound forming the self-assembling monomolecular film; thereby achieving the present invention.

Also, the inventors have found that the above-mentioned objects can be achieved when one terminal of a power source is connected to one end of a substrate, the other terminal of the power source is connected to the other end of the substrate, and the substrate itself is energized by this power source at the time when the self-assembling compound is supplied; thereby achieving the present invention.

The image forming apparatus in accordance with the present invention comprises:

a conductive substrate;

a first compound supplying device for supplying a surface of the substrate with a self-assembling compound adapted to be adsorbed to the surface of the substrate and to form a self-assembling monomolecular film;

a first energizing device, comprising a power source having one terminal connected to one end of the substrate and the other terminal connected to the other end of the substrate, for energizing the substrate when the self-assembling compound is supplied to the surface of the substrate, so as to form the self-assembling monomolecular film, thereby yielding an image forming body comprising the substrate and the self-assembling compound;

a first desorbing device for selectively desorbing from the image forming body at least a part of the self-assembling compound forming the self-assembling monomolecular film, so as to provide a surface of the image forming body with a desorbed face and an undesorbed face which have wettabilities different from each other;

a developing device for supplying the surface of the image forming body with ink which preferentially attaches to the desorbed face or undesorbed face; and

a transfer device for transferring to a recording medium the ink attached to the surface of the image forming body.

The image forming apparatus in accordance with the present invention may further comprise a second compound supplying device for supplying the surface of the image forming body with the self-assembling compound again; and a second energizing device for energizing the substrate when the self-assembling compound is supplied to the surface of the image forming body, so as to form the self-assembling monomolecular film on the desorbed face again. Preferably, in this case, the image forming apparatus further comprises a second desorbing device for desorbing the self-assembling compound forming the undesorbed face from the image forming body, so as to cause the whole surface of the image forming body to become the desorbed face.

The image forming apparatus in accordance with the present invention may further comprise a moisture supplying device which supplies, before the ink is supplied, the surface of the image forming body with moisture which preferentially attaches to the desorbed face or undesorbed face.

The image forming method in accordance with the present invention is a method including:

a first compound supplying step of supplying a surface of a conductive substrate with a self-assembling compound adapted to be adsorbed to the surface of the substrate and form a self-assembling monomolecular film;

a first energizing step of energizing the substrate when the self-assembling compound is supplied to the surface of the substrate with an energizing device comprising a power source having one terminal connected to one end of the substrate and the other terminal connected to the other end of the substrate, so as to form the self-assembling monomolecular film, thereby yielding an image forming body comprising the substrate and the self-assembling compound;

a first desorbing step of selectively desorbing from the image forming body at least a part of the self-assembling compound forming the self-assembling monomolecular film, so as to provide a surface of the image forming body with a desorbed face and an undesorbed face which have wettabilities different from each other;

a developing step of supplying the surface of the image forming body with ink which preferentially attaches to the desorbed face or undesorbed face; and

a transfer step of transferring to a recording medium the ink attached to the surface of the image forming body.

The image forming method in accordance with the present invention may further include a second compound supplying step of supplying the surface of the image forming body with the self-assembling compound again; and a second energizing step of energizing the substrate when the self-assembling compound is supplied to the surface of the image forming body, so as to form the self-assembling monomolecular film on the desorbed face again. Preferably, in this case, the image forming method further includes a second desorbing step of desorbing the self-assembling compound forming the undesorbed face from the image forming body, so as to cause the whole surface of the image forming body to become the desorbed face.

The image forming method in accordance with the present invention may further include a moisture supplying step of supplying, before the ink is supplied, the surface of the image forming body with moisture which preferentially attaches to the desorbed face or undesorbed face.

The platemaking method in accordance with the present invention is a method including:

a compound supplying step of supplying a surface of a conductive substrate with a self-assembling compound adapted to be adsorbed to the surface of the substrate and form a self-assembling monomolecular film;

an energizing step of energizing the substrate when the self-assembling compound is supplied to the surface of the substrate with an energizing device comprising a power source having one terminal connected to one end of the substrate and the other terminal connected to the other end of the substrate, so as to form the self-assembling monomolecular film, thereby yielding an image forming body comprising the substrate and the self-assembling compound; and

a desorbing step of selectively desorbing from the image forming body at least a part of the self-assembling compound forming the self-assembling monomolecular film, so as to provide a surface of the image forming body with a desorbed face and an undesorbed face which have wettabilities different from each other, thereby yielding a printing plate.

The method of forming a self-assembling monomolecular film in accordance with the present invention is a method including:

a compound supplying step of supplying a surface of a conductive substrate with a self-assembling compound adapted to be adsorbed to the surface of the substrate and form the self-assembling monomolecular film; and

an energizing step of energizing the substrate when the self-assembling compound is supplied to the surface of the substrate with an energizing device comprising a power source having one terminal connected to one end of the substrate and the other terminal connected to the other end of the substrate, so as to form the self-assembling monomolecular film.

The above-mentioned self-assembling compound in the present invention is, as will be described later in detail, a compound which can spontaneously form a substantially uniform adsorption film of a monomolecular layer (self-assembling monomolecular film) on a predetermined substrate surface (solid-liquid interface), such as one having an adsorptive functional group adapted to be adsorbed to the surface of the substrate and an aliphatic compound residue combined with the adsorptive functional group, in which the adsorptive functional group and the aliphatic compound residue are preferably combined with each other by way of at least one ionic bond portion. Preferred examples of the self-assembling compound having an ionic bond portion as such include those having an adsorptive functional group adapted to be adsorbed to the surface of the substrate, at least one hydrocarbon residue combined with the adsorptive functional group, the above-mentioned at least one ionic bond portion, and at least one aliphatic compound residue combined with the hydrocarbon residue by way of the ionic bond portion. Particularly preferred examples thereof include the following compounds:

a disulfide compound expressed by the following general formula (1):

$$R^3\text{-}X^1\text{-}R^1\text{-}S\text{-}S\text{-}R^2\text{-}X^2\text{-}R^4 \tag{1}$$

where, in expression (1), $R^1$ and $R^2$ may be identical or different from each other, each indicating a hydrocarbon residue selected from the group consisting of alkylene groups having a carbon number of 1 to 15, aliphatic cyclic hydrocarbon residues having a carbon number of 3 to 6, and aromatic hydrocarbon residues; $X^1$ and $X^2$ may be

identical or different from each other, each indicating an ionic bond portion selected from the group consisting of -$COO^-{}^+H_3N-$ and $-O^-{}^+HN=N-$; and $R^3$ and $R^4$ may be identical or different from each other, each indicating an aliphatic compound residue selected from the group consisting of alkyl residues having a carbon number of 1 to 22 and halogen-substituted aliphatic compound residues having a carbon number of 1 to 22;

a sulfide compound expressed by the following general formula (2):

$$R^7-X^3-R^5-S-R^6-X^4-R^8 \qquad (2)$$

where, in expression (2), $R^5$ and $R^6$ may be identical or different from each other, each indicating a hydrocarbon residue selected from the group consisting of alkylene groups having a carbon number of 1 to 15, aliphatic cyclic hydrocarbon residues having a carbon number of 3 to 6, and aromatic hydrocarbon residues; $X^3$ and $X^4$ may be identical or different from each other, each indicating an ionic bond portion selected from the group consisting of -$COO^-{}^+H_3N-$ and $-O^-{}^+HN=N-$; and $R^7$ and $R^8$ may be identical or different from each other, each indicating an aliphatic compound residue selected from the group consisting of alkyl residues having a carbon number of 1 to 22 and halogen-substituted aliphatic compound residues having a carbon number of 1 to 22; and

a thiol compound expressed by the following general formula (3):

$$H-S-R^9-X^5-R^{10} \qquad (3)$$

where, in expression (3), $R^9$ indicates a hydrocarbon residue selected from the group consisting of alkylene groups having a carbon number of 1 to 15, aliphatic cyclic hydrocarbon residues having a carbon number of 3 to 6, and aromatic hydrocarbon residues; $X^5$ indicates an ionic bond portion selected from the group consisting of -$COO^-{}^+H_3N-$ and $-O^-{}^+HN=N-$; and $R^{10}$ indicates an aliphatic compound residue selected from the group consisting of alkyl residues having a carbon number of 1 to 22 and halogen-substituted aliphatic compound residues having a carbon number of 1 to 22.

In the present invention, at the time when the self-assembling compound is supplied to the surface of the substrate, the substrate itself is energized by an energizing device comprising a power source having one terminal connected to one end of the substrate and the other terminal connected to the other end of the substrate, so that the speed at which the self-assembling compound is adsorbed to the substrate surface improves, whereby the self-assembling monomolecular film in which the self-assembling compound is uniformly arranged can be obtained efficiently and reliably in a shorter time as compared with the case where the substrate is not energized. Therefore, the time required for making the image forming body employed as a printing plate can be shortened, whereby higher-speed printing can be realized.

Further, in accordance with the present invention, since the self-assembling compound is arranged uniformly and reliably on the substrate surface in a short time, print smudges are sufficiently kept from occurring due to the substrate surface (defect portions of the monomolecular film) not covered (modified) with the self-assembling monomolecular film, whereby higher-resolution printing can be realized.

The reaction of forming such a self-assembling monomolecular film is constituted by two steps. Specifically, the first step is the dissociation of the self-assembling compound (e.g., dissociation of the hydrogen atom combined with the sulfur atom in the case of thiol, dissociation of the S-S bond in the case of disulfide, and dissociation of one of the groups combined with the sulfur atom in the case of sulfide) upon adsorption to the substrate surface, whereas the second step is the adsorption of the dissociated (e.g., partly dissociated) self-assembling compound residue to the substrate surface. For example, it has been reported that alkane thiol is rapidly adsorbed to the substrate surface at the same time as hydrogen is dissociated (Naoki Nishida et al., IEICE Technical Report, OME 96-33 (1996), 43-48). Hence, it is presumed in the present invention that, since the substrate itself is energized when the self-assembling compound is supplied to the substrate surface, the dissociating speed corresponding to the first step improves, whereby the self-assembling compound is uniformly arranged on the substrate surface efficiently and reliably in a short time.

**Brief Description of the Drawings**

Fig. 1 is a flowchart showing a preferred embodiment of the image forming method and platemaking method in accordance with the present invention using the method of forming a self-assembling monomolecular film in accordance with the present invention;

Figs. 2A to 2G are schematic views in section showing the states of a substrate surface at various steps in a preferred embodiment of the image forming method in accordance with the present invention (in which Figs. 2A and 2B show the method of forming a self-assembling monomolecular film in accordance with the present invention, and Figs. 2A to 2C show the platemaking method in accordance with the present invention), respectively;

Fig. 3 is a schematic view in section showing an example of the state in which a self-assembling monomolecular film is re-formed in an image forming body in accordance with the present invention;

Fig. 4 is a schematic view showing a preferred embodiment of the image forming apparatus in accordance with the present invention;

Fig. 5 is a schematic view in section showing an example of the state in which a self-assembling compound in accordance with the present invention is adsorbed to the substrate surface;

Fig. 6 is a schematic view in section showing an example of the state in which the self-assembling compound in accordance with the present invention is selectively desorbed from the substrate surface;

Fig. 7 is a schematic view in section showing an example of the state in which the self-assembling monomolecular film in accordance with the present invention is re-formed;

Fig. 8 is a schematic view in section showing another example of the state in which the self-assembling compound in accordance with the present invention is adsorbed to the substrate surface;

Fig. 9 is a schematic view in section showing another example of the state in which the self-assembling compound in accordance with the present invention is selectively desorbed from the substrate surface;

Fig. 10 is a schematic view in section showing another example of the state in which the self-assembling monomolecular film in accordance with the present invention is re-formed;

Fig. 11 is a schematic view in section showing still another example of the state in which the self-assembling compound in accordance with the present invention is adsorbed to the substrate surface;

Fig. 12 is a schematic view in section showing still another example of the state in which the self-assembling compound in accordance with the present invention is selectively desorbed from the substrate surface;

Fig. 13 is a schematic view in section showing still another example of the state in which the self-assembling monomolecular film in accordance with the present invention is re-formed;

Fig. 14 is a schematic view in section showing a further example of the state in which the self-assembling compound in accordance with the present invention is adsorbed to the substrate surface;

Fig. 15 is a schematic view in section showing a further example of the state in which the self-assembling compound in accordance with the present invention is selectively desorbed from the substrate surface; and

Fig. 16 is a schematic view in section showing a further example of the state in which the self-assembling monomolecular film in accordance with the present invention is re-formed.

**Best Modes for Carrying Out the Invention**

In the following, preferred embodiments of the present invention will be explained in detail with reference to the drawings. In the drawings, parts identical or equivalent to each other will be referred to by numerals or letters identical to each other.

The substrate in accordance with the present invention is not restricted in particular as long as it is conductive, examples of which include metals such as gold, platinum, silver and copper. among which gold and platinum are particularly preferable. Also, it is sufficient if at least the surface of the substrate to be formed with the self-assembling monomolecular film is conductive, whereby the substrate may be an insulating material coated with the above-mentioned conductive material.

Also, one end of the substrate in accordance with the present invention is connected to one terminal of a power source, whereas the other end of the substrate is connected to the other terminal of the power source, so that at least the surface of the substrate can be energized. The specific method of connecting the substrate and the power source is not restricted in particular.

Preferable as the self-assembling compound in accordance with the present invention is one having an ionic bond portion (ion pair) therewithin, whereby a part thereof is easily dissociated at a low level of energy. As a consequence, when a self-assembling compound having an ionic bond portion is employed, a desorbed face and an undesorbed face having wettabilities different from each other tend to be formed easily at a lower level of energy as compared with the case where a self-assembling compound having no ionic bond portion is used. Further, an ionic bond is easily formed in the presence of an anion and a cation which are to form the ionic bond portion. Therefore, when the self-assembling compound (which may be only the part (desorbing portion) on the side not adapted to be adsorbed to the substrate from the ionic bond portion) is supplied again to the part (part (remaining portion) on the side adapted to be adsorbed to the substrate from the ionic bond portion) remaining on the image forming body (substrate) after the self-assembling compound is dissociated at the ionic bond portion, an undissociated self-assembling monomolecular film tends to be easily reproduced.

Examples of the preferable self-assembling compound in the present invention include the following:

(I) A disulfide compound expressed by general formula (1): $R^3-X^1-R^1-S-S-R^2-X^2-R^4$, which is represented by:

i) absorptive functional group: SS group (disulfide group);
ii) substrate: gold or silver;
iii) $R^1$ and $R^2$ being either identical or different from each other, each indicating a hydrocarbon residue, which is more specifically selected from the following:

1) alkylene groups (e.g., $-C_xH_{2x}-$ where x = 1 to 15);
2) aliphatic cyclic hydrocarbon residues (e.g., cycloalkane, cycloalkene, and cycloalkyne residues having a carbon number of 3 to 6); and
3) aromatic hydrocarbon residues (e.g., benzene residue);

iv) $X^1$ and $X^2$ being either identical or different from each other, each indicating an ionic bond portion, which is more specifically $-COO^{-+}H_3N-$ or $-O^{-+}HN=N-$; and
v) $R^3$ and $R^4$ being either identical or different from each other, each indicating an aliphatic compound residue, which is more specifically selected from the following:

a) alkyl residues (e.g., $-C_mH_{2m+l}$ where m = 1 to 22);
b) halogen (F, Br, Cl)-substituted alkyl residues (e.g., $-C_nA_aH_b$ where A = F, Br, or Cl, n = 1 to 22, and a + b = 2n + 1 );
c) alkenyl residues (e.g., $-(CH_2)_{17}CH=CH_2$);
d) alcohol residues (e.g., $-(CH_2)_pOH$ where p = 2 to 22);
e) aliphatic carboxylic acid residues (e.g., $-(CH_2)_qCOOH$ where q = 1 to 15);
f) aliphatic carboxylic acid ester residues (e.g., $-(CH_2)_rCOOCH_3$ where r = 10 to 15);
g) aliphatic ether residues (e.g., $- (CH_2)_{11}OCH_3$);
h) aliphatic thiol ester residues (e.g., $- (CH_2)_{12}SCOCH_3$);
i) alkyl cyanide residues (e.g., $-(CH_2)_8CN$);
j) siloxylated alkyl residues (e.g., $- (CH_2)_{11}OSi(CH_3)_2(C(CH_3)_3)$);
k) carbamoyl alkyl residues (e.g., $- (CH_2)_{15}CONH_2$); and
l) aliphatic amine residues (e.g., $- (CH_2)_2NH_2$).

(II) A sulfide compound expressed by general formula (2): $R^7-X^3-R^5-S-R^6-X^4-R^8$, which is represented by:

i) adsorptive functional group: S group (sulfide group);
ii) substrate: gold or silver;
iii) $R^5$ and $R^6$ being similar to $R^1$ and $R^2$ mentioned above;
iv) $X^3$ and $X^4$ being similar to $X^1$ and $X^2$ mentioned above; and
v) $R^7$ and $R^8$ being similar to $R^3$ and $R^4$ mentioned above.

(III) A thiol compound expressed by general formula (3): $H-S-R^9-X^5-R^{10}$, which is represented by:

i) adsorptive functional group: SH group (thiol group);
ii) substrate: gold, silver, or the like; and
iii) to v) $R^9$, $X^5$, and $R^{10}$ being similar to $R^1$, $X^1$, and $R^3$ mentioned above, respectively.

(IV) A carboxylic acid compound expressed by general formula (4): $HOOC-R^{11}-X^6-R^{12}$, which is represented by:

i) adsorptive functional group: COOH group (carboxylic group);
ii) substrate: platinum or aluminum; and
iii) to v) $R^{11}$, $X^6$, and $R^{12}$ being similar to $R^1$, $X^1$, and $R^3$ mentioned above, respectively.

(V) An amine compound expressed by general formula (5): $H_2N-R^{13}-X^7-R^{14}$, which is represented by:

i) adsorptive functional group: $NH_2$ group (amino group);
ii) substrate: platinum; and
iii) to v) $R^{13}$, $X^7$, and $R^{14}$ being similar to $R^1$, $X^1$, and $R^3$ mentioned above, respectively.

(VI) A diazo compound expressed by general formula (6): $N_2-R^{15}-X^8-R^{16}$, which is represented by:

i) adsorptive functional group: $N_2$ group (diazo group);
ii) substrate: platinum; and
iii) to v) $R^{15}$, $X^8$, and $R^{16}$ being similar to $R^1$, $X^1$, and $R^3$ mentioned above, respectively.

(VII) An azide compound expressed by general formula (7): $N_3$-$R^{17}$-$X^9$-$R^{18}$, which is represented by:

i) adsorptive functional group: $N_3$ group (azide group);
ii) substrate: platinum; and
iii) to v) $R^{17}$, $X^9$, and $R^{18}$ being similar to $R^1$, $X^1$, and $R^3$ mentioned above, respectively.

Here, without being restricted to those mentioned above, the self-assembling compound in accordance with the present invention may be any compound as long as it can form a self-assembling monomolecular film on a predetermined substrate surface. Since sulfur exhibits a specific affinity for gold, however, the above-mentioned disulfide compound, sulfide compound, and thiol compound including sulfur as an absorptive functional group are preferable when gold is used as a substrate.

Though the ionic bond portion (ion pair) in the self-assembling compound in accordance with the present invention is not restricted to those mentioned above in particular, it is preferred that the ion binding energy in the ion pair be lower (the binding be weaker) than that between the substrate and the adsorptive functional group. The part of the ionic bond portion on the side to be adsorbed to the substrate so as to remain and the part on the other side to be desorbed may have positive and negative charges, respectively; or vice versa.

The hydrocarbon residue in accordance with the present invention is not restricted to those mentioned above in particular, and is selected depending on the combination of the substrate and adsorptive functional group employed.

Though one ionic bond portion is combined with each of the above-mentioned hydrocarbon residues; without being restricted thereto, a plurality of ionic bond portions may be combined with the hydrocarbon residue. Further, the adsorptive functional group and the hydrocarbon residue may integrally construct a five- or six-membered heterocycle containing one or two sulfur atoms.

Also, without being restricted to those mentioned above, the aliphatic compound residue in accordance with the present invention is selected depending on the combination of the substrate and the adsorptive functional group and hydrocarbon residue employed. When an alkyl residue or a halogen-substituted aliphatic compound residue (e.g., halogen-substituted alkyl residue) or an alcohol residue is used as the aliphatic compound residue, one having a carbon number within the range of 1 to 22 is preferable, and one having a carbon number within the range of 5 to 15 is particularly preferable. This is due to the fact that the thermal stability of the bonding between the self-assembling compound and the substrate and hydrocarbon residue tends to become too high when the carbon number is too large, whereas there tends to occur a possibility that the self-assembling compound adsorbed to the substrate fails to attain a sufficient uniformity when the carbon number is too small.

The self-assembling monomolecular film formed by the above-mentioned self-assembling compound yields a surface in which the terminal of aliphatic compound residue (which is the end on the side not combined with the adsorptive functional group) is substantially uniformly arranged, whereby the wettability of the monomolecular film surface is not influenced by the substrate surface and the ionic bond portion. As a consequence, controlling the terminal functional group on the self-assembling monomolecular film surface (the terminal functional group of the aliphatic compound residue) enables the surface to have various characteristics. Specifically, using a water-repellent and lipophilic, hydrophilic and oil-repellent, or water- and oil-repellent functional group as its terminal functional group together with a substrate surface or ionic bond portion adapted to yield a wettability (e.g., hydrophilic and lipophilic property) different from that of the terminal functional group upon dissociation can reversely change and thus control the wettability of the image forming body surface constituted thereby, so as to be utilized in the image forming apparatus.

For example, when a self-assembling compound having at a terminal an alkyl residue in which only hydrogen atoms are combined with its carbon main chain is employed, the surface of the resulting monomolecular film exhibits a water-repellent and lipophilic property, whereas the dissociated ionic bond portion (the part of the ionic bond portion remaining as being adsorbed to the substrate) exhibits a hydrophilic and lipophilic property. As a consequence, the area modified with the undissociated self-assembling compound becomes water-repellent and lipophilic, whereas the area in which the aliphatic compound residue is desorbed by the dissociation of the ionic bond portion becomes hydrophilic and lipophilic. On the other hand, when a self-assembling compound having at a terminal an alkyl residue whose hydrogen atoms have partly or completely been substituted by a halogen (e.g. fluorine) is employed, the surface of the resulting monomolecular film exhibits a water- and oil-repellent property, whereas the dissociated ionic bond portion exhibits a hydrophilic and lipophilic property. As a consequence, the area modified with the undissociated halogenated self-assembling compound becomes water-and oil-repellent, whereas the area in which the aliphatic compound residue is desorbed by the dissociation of the ionic bond portion becomes hydrophilic and lipophilic.

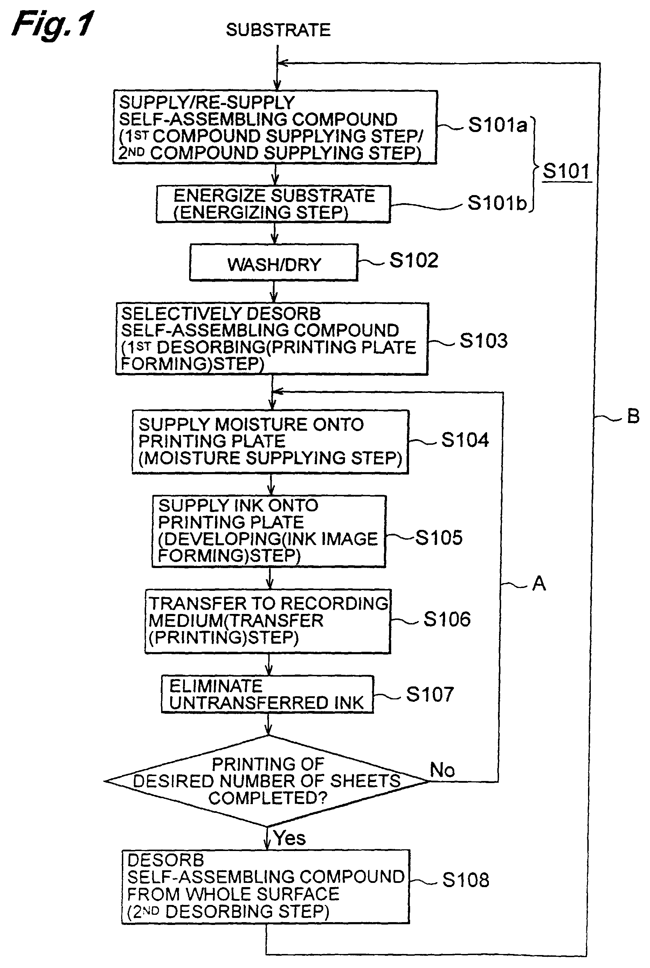

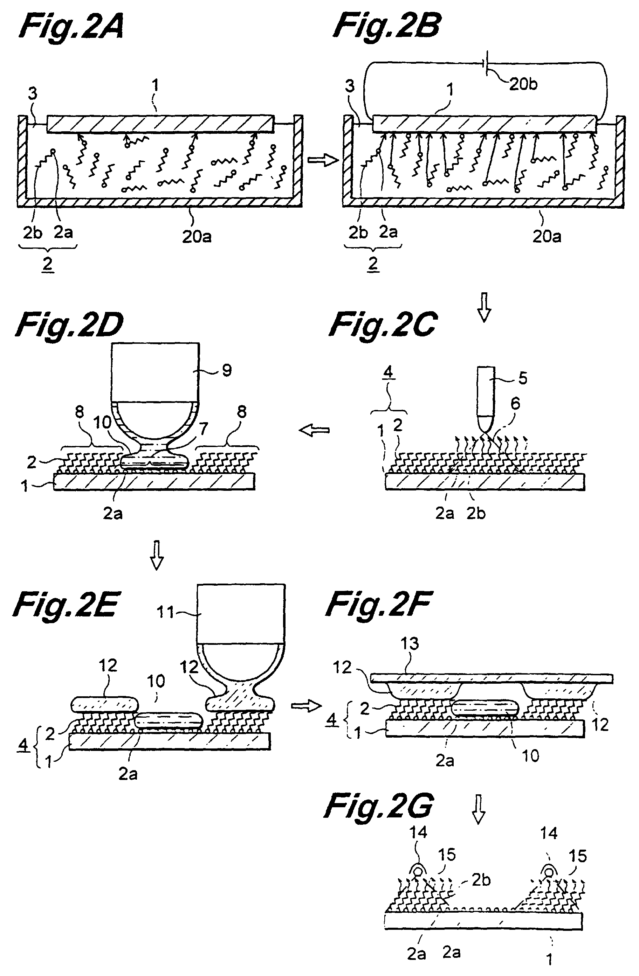

With reference to Figs. 1 and 2A to 2G, preferred embodiments of not only the method of forming a self-assembling monomolecular film in accordance with the present invention but also the image forming method and platemaking method in accordance with the present invention using the above-mentioned method will now be explained in detail. Fig. 1 is a flowchart showing a preferred embodiment of the image forming method in accordance with the present invention (in Fig. 1, steps S101a to S102 corresponding to a preferred embodiment of the method of making a self-assembling monomolecular film in accordance with the present invention, and steps S101 to S103 corresponding to a preferred embodiment of the platemaking method in accordance with the present invention), whereas Figs. 2A to 2G are schematic views in section showing respective states of a substrate surface at various steps in a preferred embodiment of the image forming method in accordance with the present invention (Figs. 2A and 2B corresponding to respective states of the substrate surface at various steps in a preferred embodiment of the method of forming a self-assembling monomolecular film in accordance with the present invention, and Figs. 2A to 2C corresponding to respective states of the substrate surface at various steps in a preferred embodiment of the platemaking method in accordance with the present invention).

First, in this embodiment, a surface of a substrate 1 is immersed in a solution 3 of a self-assembling compound 2 in a vessel (compound supplying device) 20a, so as to supply the self-assembling compound 2 to the surface of the substrate 1. Consequently, as shown in Fig. 2A, a part of the self-assembling compound 2 is spontaneously arranged on and adsorbed to the surface (solid-liquid interface) of the substrate 1, whereas the rest of the self-assembling compound 2 is left dissolved in the solution 3 (first compound supplying step S101a). At this time, the substrate 1 is energized by a power source (energizing device) 20b having one terminal connected to one end of the substrate 1 and the other terminal connected to the other end of the substrate 1. When the substrate 1 is thus energized, the self-assembling compound 2 is arranged on and adsorbed to the surface of the substrate 1 at a high speed as shown in Fig. 2B, so as to form in a short time an adsorption film of a monomolecular layer (self-assembling monomolecular film) in which the self-assembling compound 2 is uniformly arranged with a high density, thereby yielding an image forming body 4 (first energizing step S101b). Here, the first compound supplying step S101a and the first energizing step S101b constitute a first film forming step S101. The self-assembling compound 2 is constituted by an adsorptive functional group, a hydrocarbon residue combined therewith, an ionic bond portion, and an aliphatic compound residue combined with the hydrocarbon residue by way of the ionic bond portion. The adsorptive functional group, the hydrocarbon group, and a part of the ionic bond portion (the part on the side adapted to be adsorbed to the substrate so as to remain) are indicated by 2a, whereas the aliphatic compound residue and the other part of the ionic bond portion (the part on the side to be desorbed) are indicated by 2b. In the following, the portion corresponding to 2a is referred to as "remaining portion," whereas the portion corresponding to 2b is referred to as "desorbing portion." As shown in Fig. 2C, the adsorptive functional group of the self-assembling compound 2 is adsorbed to the surface of the substrate 1, whereas the terminal of the aliphatic compound residue is exposed to the surface of the self-assembling monomolecular film (the face on the exposed side).

The factors influencing the forming speed of such a self-assembling monomolecular film include the applied current, temperature, the kind of solvent and, the concentration of solution. They are appropriately selected, according to the combination of the self-assembling compound and substrate employed, so as to increase the forming speed. Here, in order to form a monomolecular film in a shorter time, the current applied when energizing the substrate 1 is preferably 0.1 A or greater, particularly preferably 1 to 5 A. If the applied current is less than the lower limit mentioned above, the time required for forming the monomolecular film will tend to be shortened insufficiently; whereas, if the applied current exceeds the upper limit mentioned above, the required energizing device and its accompanying equipment for leak prevention will increase in size so much that disadvantages tend to occur in terms of cost. Though not restricted in particular, the applied voltage is preferably adjusted such that the applied current is supplied according to the resistance of the substrate 1. Further, the monomolecular film can be formed at room temperature as well. Though the solvent is not restricted in particular, its intrusiveness into the monomolecular layer is preferably low, and organic solvents are preferred from the viewpoint of the solubility of the self-assembling compound. Among others, ethanol (protonic polar solvent), ethyl acetate (nonprotonic polar solvent) and hexane (nonpolar solvent), are preferably used. For reliably obtaining a monomolecular film, the concentration of the self-assembling compound 2 in the solution 3 is preferably 0.0001 mM or higher, particularly preferably at least 0.01 mM but not higher than 10 mM. It is due to the fact that it tends to take a longer time for forming a monomolecular film if the concentration of solution is less than the lower limit mentioned above, whereas a possibility of the self-assembling compound itself inhibiting the self-assembling or an excess of the self-assembling compound being deposited on the surface tends to occur if the concentration of solution exceeds the upper limit mentioned above.

In the present invention, since the self-assembling monomolecular film is formed while the substrate itself is energized, the adsorbing speed of the self-assembling compound is improved as mentioned above, so that the time required for forming the film is shortened to about 1/2 or less of that in the case where the substrate is not energized. Here, it is not always necessary for the self-assembling monomolecular film to be formed onto the substrate surface to such an extent that the monomolecular film is completely formed (the compound density attains a saturated state). It will be sufficient if the self-assembling compound is substantially uniformly adsorbed to the substrate surface so that the wettability of the monomolecular film surface differs from the wettability of the substrate surface. Hence, even in the case where it takes several minutes to several hours to obtain a complete monomolecular film, an image forming body in which different wettabilities are caused by a substantially uniform monomolecular film can be obtained in 10 and a few seconds.

Subsequently, the self-assembling monomolecular film formed in the image forming body 4 is washed with a solvent, so as to eliminate the part of self-assembling compound not involved in film formation, and then is dried so as to eliminate the solvent (washing/drying step S102). Such a washing step is not always necessary, and the drying step may be carried out alone.

Then, as shown in Fig. 2C, thermal energy 6 is selectively applied from a thermal head 5 to the self-assembling compound 2 forming the self-assembling monomolecular film, so as to selectively dissociate the ionic bond portion of the self-assembling compound 2, thereby selectively desorbing the desorbing portion 2b of the self-assembling compound 2 from the surface of the image forming body 4. Consequently obtained is the image forming body 4 (i.e., a printing plate for image formation (transfer)) whose surface is formed with a desorbed face 7 and an undesorbed face 8 which have wettabilities different from each other (first desorbing step S103).

Though the temperature and time used for thus dissociating the ionic bond portion are appropriately selected according to the binding energy of the ionic bond portion of the self-assembling compound (thermal stability of the monomolecular film) employed; since the ionic bond portion usually has a binding energy lower than that of a covalent bond, the ionic bond portion is easily dissociated at a lower energy as compared with the case where the self-assembling compound having no ionic bond portion is used. The temperature at this time is preferably within the range of 100 to 300°C. After the first desorbing step S103, a step of eliminating the desorbed desorbing portion 2b by washing the surface of the image forming body 4 and then eliminating the washing liquid by drying (not depicted) may further be provided.

In the desorbing step of the self-assembling compound 2, though a part of the self-assembling compound 2 in the desorbed face 7 may be completely desorbed (dissociated between the substrate and the adsorptive functional group), the dissociation of the ionic bond portion usually occurs in preference to the dissociation between the substrate and the adsorptive functional group since the ion binding energy in the ionic bond portion is lower than that between the substrate and the adsorptive functional group.

Subsequently, moisture (which may contain additives) 10 is supplied to the surface of the image forming body 4 from a moisture supplying device 9 (moisture supplying step S104). Fig. 2D shows a case where the desorbed face 7 is hydrophilic, whereas the undesorbed face 8 is water-repellent and lipophilic, whereby the moisture 10 preferentially adheres to the desorbed face 7.

Thereafter, ink (oil ink) 12 is supplied to the surface of the image forming body 4 from a developing device 11 (developing step S105). As shown in Fig. 2E, the ink 12 preferentially adheres to the lipophilic undesorbed face 8, while bypassing the desorbed face 7 provided with the moisture 10 attached thereto, thereby forming an ink image.

Then, as shown in Fig. 2F, a recording medium 13 abuts against the image forming body 4, whereby the ink 12 attached to the surface of the image forming body 4 is transferred to the recording medium 13 (transfer step S106). Hence, the first printing sequence (printing process) is completed.

If a plurality of sheets of the same image are to be copy-printed subsequently, the untransferred ink 12 attached to the surface of the image forming body 4 is eliminated (untransferred ink eliminating step S107), and then the moisture supplying step S104, developing step S105, transfer step S106, and untransferred ink eliminating step S107 are repeated a predetermined number of times as indicated by A in Fig. 1. Here, it is not always necessary to carry out the untransferred ink elimination and moisture supply each time.

Thus, in the image forming method of the present invention, the same printing plate can be used repeatedly. Consequently, in accordance with the present invention, it is not necessary to form a latent image per sheet as required in the conventional electrophotographic printer, and therefore high-speed printing is possible.

After copy printing of a desired number of sheets is complete, thermal energies 15 are applied to the self-assembling compound 2 forming the undesorbed face 8 from halogen lamps 14 as shown in Fig. 2G. so as to desorb the desorbing portion 2b of the self-assembling compound 2 from the surface of the image forming body 4. As a consequence, the whole surface of the image forming body 4 becomes a desorbed face (second desorbing step S108). Thereafter, as indicated by B in Fig. 1, when the self-assembling compound 2 is supplied to the surface of the image forming body 4 again (second compound supplying step S101a), while the substrate 1 is energized (second energizing step S101b), an ionic bond is formed between the remaining portion 2a on the substrate 1 and the desorbing portion 2b of the newly supplied self-assembling compound 2, whereby an undissociated self-assembling monomolecular film is efficiently and reliably formed on the above-mentioned desorbed face again (second film forming step S101). Then, as the above-mentioned various steps (S101 to S108) are repeated, a desired number of sheets are copy-printed for each of a plurality of images.

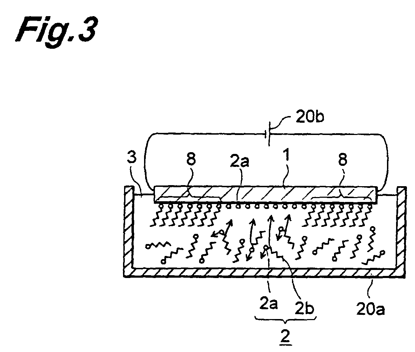

Here, in the case where the above-mentioned second desorbing processing S108 is carried out, the uniformity of the re-formed self-assembling monomolecular film tends to improve more. However, since the desorbing portion 2b of the self-assembling compound 2 can newly form an ionic bond with the remaining portion 2a of the desorbed face 7, as shown in Fig. 3, so as to re-form the monomolecular film in this part, and the monomolecular film is formed again more efficiently due to the energizing of the substrate 1, the second desorbing step S108 is not always necessary.

Thus, in the image forming method of the present invention, the same image forming body can repeatedly be used for a plurality of images, and the forming and erasing of the printing plate is possible by simple processing operations such as immersion to a solution, energizing, and heating. Therefore, in accordance with the present invention, complicated devices for discarding stencils and winding new stencils, which have been necessitated in the conventional mimeograph printer, are unnecessary, and therefore higher-speed image formation is possible by a small-sized, simple apparatus.

Though preferred embodiments of the image forming method and platemaking method in accordance with the present invention are explained in detail in the foregoing, the methods of the present invention are not restricted to the above-mentioned embodiments.

For example, the self-assembling compound on the desorbed face may be completely desorbed, i.e., dissociated between the substrate and the adsorptive functional group, so as to form a desorbed face having a wettability different from that of the undesorbed face. Also, while a part of the self-assembling compound on the desorbed face is completely desorbed, a part (desorbing portion) of the rest of the self-assembling compound may be desorbed. This is due to the fact that, depending on the combination of the self-assembling compound and substrate employed, there are cases where the desorption of the self-assembling compound from the substrate is preferentially carried out, where the desorption (dissociation) of the aliphatic compound residue (desorbing portion) from the self-assembling composition is preferentially carried out, and where the adsorptive functional group is desorbed from the substrate after the aliphatic compound residue (desorbing portion) is desorbed (dissociated) from the self-assembling compound (see Masahiko Hara et al., Journal of Applied Physics, Japan, Vol. 64, No. 12 (1995), 1234-1238).

Also, the above-mentioned embodiments indicate, as a method of supplying the self-assembling compound, a method in which the substrate is immersed in a solution. As such a self-assembling monomolecular compound supplying method, however, a method in which the solution is sprayed on the substrate as will be mentioned later, or a method in which the solution is supplied to the substrate by way of a roller or blade may be employed as well.

Further, the above-mentioned embodiments indicate, as a method of desorbing the self-assembling compound, a method based on heating utilizing a thermal head, and a method based on light irradiation utilizing halogen lamps. However, as such a desorbing method, a method spraying a solvent and a method utilizing a desorbing reaction based on electric energy may be employed, without being restricted to the above-mentioned heating method.

The above-mentioned embodiments indicate a case where the desorbed face is hydrophilic and lipophilic, whereas the undesorbed face is water-repellent and lipophilic, in which oil ink is used. However, water ink may be used. In this case, since the water ink preferentially adheres to the desorbed face 7, the moisture supplying step S104 becomes unnecessary. Also, the desorbed face may be hydrophilic and lipophilic whereas the undesorbed face is water- and oil-repellent. In this case, since the oil ink preferentially adheres to the desorbed face 7, the moisture supplying step S104 similarly becomes unnecessary.

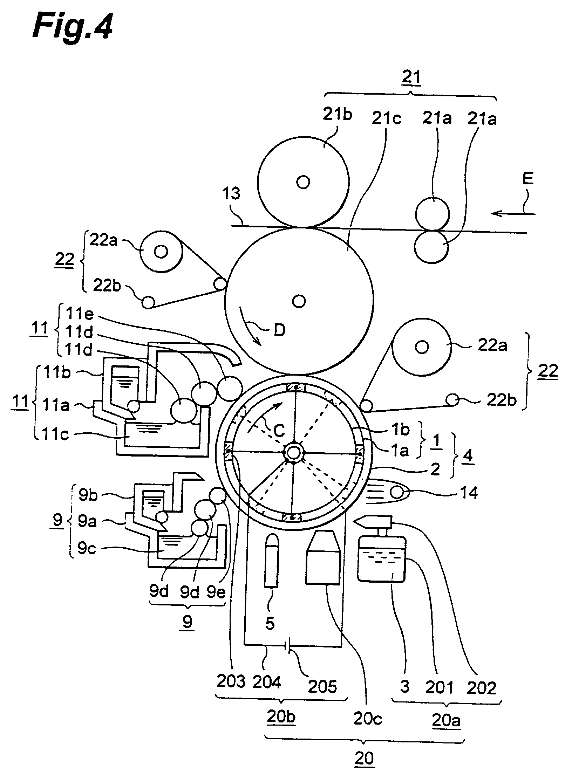

In the following, preferred embodiments of the image forming apparatus in accordance with the present invention will be explained in detail with reference to Figs. 4 to 16. In the drawings, parts identical or equivalent to each other will be referred to by numerals or letters identical to each other.

**Embodiment 1**

Fig. 4 is a schematic view showing a preferred embodiment of the image forming apparatus in accordance with the present invention. A drum 1b whose surface has a gold film 1a deposited thereon is used as an image forming substrate 1. The above-mentioned drum 1b is axially supported so as to be rotatable, and is driven to rotate in the direction of arrow C. Four electrode plates 203 are formed at an edge portion of one end of the substrate 1, whereas four electrode plates 203 are formed at an edge portion of the other end of the substrate 1 (the electrode plates on one end side and the other end side being indicated by solid lines and broken lines, respectively, in Fig. 4), each electrode 203 being connected to both terminals of a power source 205 by way of leads 204. Thus, the electrode plates 203, the leads 204, and the power source 205 constitute an energizing device (first energizing device) 20b, which can energize the substrate 1 (gold film 1a). Here, the drum 1b and its shaft (at least an intermediate portion thereof) are insulated from the energizing device.

In the following, the configuration of the image forming apparatus (printer) will be explained successively along the rotationally advancing direction of the drum 1b. First, installed under the drum 1b is a compound supplying device (first compound supplying device) 20a for supplying a self-assembling compound 2 onto the surface of the gold film 1a. The compound supplying device 20a is constituted by a solution cartridge 201 filled with a solution (film forming solution) 3 of the self-assembling compound 2 and a solution sprayer 202. Filled in the solution cartridge 201 is an ethanol solution in which 4,4'-aminophenyl disulfide (corresponding to the remaining portion 2a) expressed by the following formula:

$$NH_2\text{-}C_6H_4\text{-}SS\text{-}C_6H_4\text{-}NH_2$$

and lauric acid (corresponding to the desorbing portion 2b) expressed by the following formula:

$$C_{11}H_{23}COOH$$

have been dissolved. Installed downstream thereof is a fan 20c for drying the surface of the gold film 1a supplied with the solution 3 from the compound supplying device 20a, which constitutes, together with the above-mentioned compound supplying device 20a and energizing device 20b, a film forming device (first film forming device) 20 for forming a self-assembling monomolecular film made of the self-assembling compound 2.

Successively installed is a thermal head (first desorbing device) 5 for selectively heating the surface of the image forming body 4 formed with the self-assembling monomolecular film, so as to form a printing plate.

Then installed is a moisture supplying device (dampening device) 9 for supplying moisture to (dampening) the desorbed face (non-image area) of the image forming body 4 formed with the printing plate by the thermal head 5. The moisture supplying device 9 is constituted by a moisture dispenser 9a, a moisture cartridge 9b, moisture (dampening solution) 9c, a moisture feeding roller 9d, and a moisture applying roller 9e.

Further installed is a developer (developing device) 11 for forming an ink image on the image forming body 4 supplied with moisture. The developer 11 is constituted by an ink feeder 11a, an ink cartridge 11b, ink (oil ink) 11c, an ink feeding roller 11d, and an ink applying roller 11e.

Installed above the drum 1b is a transfer device 21 for transferring the ink image formed on the image forming body 4 by the developer 11 to a recording medium 13. The transfer device 21 is constituted by a transfer drum 21c, paper-feed rollers 21a, and a platen roller 21b, whereas the transfer drum 21c rotates in the direction of arrow D in synchronization with the rotation of the image forming body 4.

Further installed are ink cleaners 22 for eliminating the untransferred ink on the drum 1b and transfer drum 21c. Each ink cleaner 22 is constituted by a cleaning buff 22a and a take-up shaft 22b.

Finally installed is a halogen lamp (second desorbing device) 14 for heating the whole surface of the image forming body 4 so as to desorb the desorbing portion 2b of the self-assembling monomolecular film 2. Here, the above-mentioned first film forming device (first compound supplying device 20a and first energizing device 20b) 20 also acts as a second film forming device (second compound supplying device and second energizing device) for re-forming a self-assembling monomolecular film onto the image forming body 4 in which the desorbing portion 2b of the self-assembling compound 2 has been eliminated from the whole surface thereof by the halogen lamp 14.

Operations in the above-mentioned apparatus in this embodiment will now be explained.

First, the halogen lamp 14 is used for heating the whole surface of the gold film 1a, thereby eliminating the impurities on the surface of the gold film 1a. As a consequence, a denser self-assembling monomolecular film can be formed.

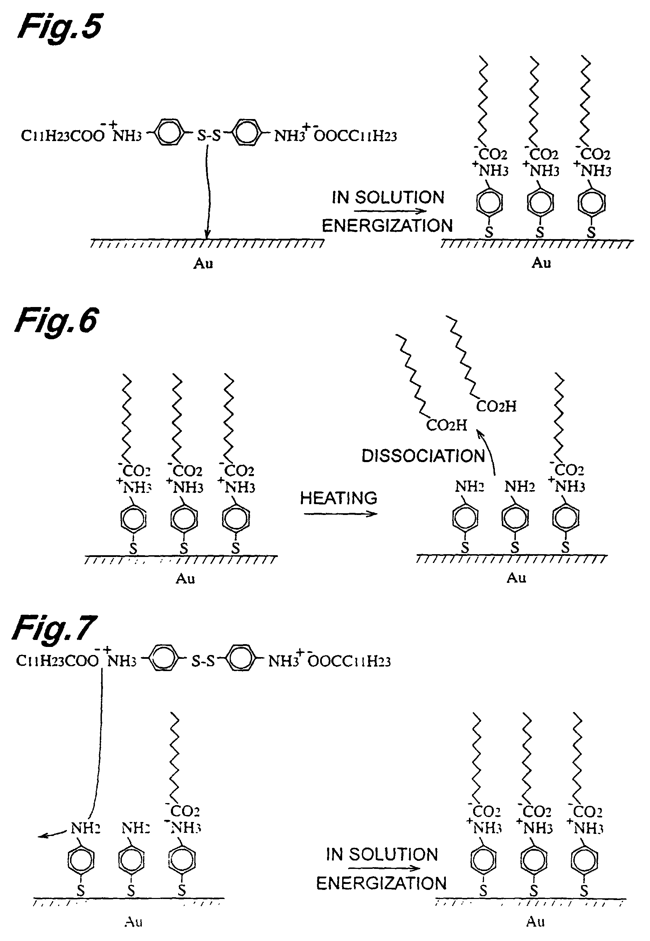

Subsequently, the film forming solution 3 is supplied to the surface of the gold film 1a by the solution sprayer 202 of the compound supplying device 20a. When thus supplied to the surface of the gold film 1a, a part of the self-assembling compound 2 is adsorbed to the surface of the gold film 1a due to its molecular assembling property. Then, when the gold film 1a supplied with the self-assembling compound 2 is energized by the energizing device 20b, the self-assembling compound (thiolate) 2 is arranged on and adsorbed to the surface of the gold film 1a rapidly and uniformly as shown in Fig. 5. Thereafter, the surface of the gold film 1a provided with the above-mentioned film forming solution is dried by the fan 20c. A self-assembling monomolecular film 2 having an ionic bond portion (ion pair) therewithin is uniformly formed on the surface of the dried gold film 1a as shown in the same drawing.

Subsequently, when the thermal head 5 is caused to act on the surface of the gold film 1a uniformly formed with the self-assembling monomolecular film 2, so as to selectively heat the self-assembling monomolecular film 2, the ionic bond in the heated self-assembling monomolecular film 2 is dissociated as shown in Fig. 6, whereby the desorbing portion 2b of the self-assembling compound is selectively desorbed.

The surface (desorbed face) of the gold film 1a from which the desorbing portion (lauric acid) 2b of the self-assembling compound has thus been desorbed becomes a surface covered with the remaining portion (aminophenyl thiolate) 2a of the self-assembling compound alone, whereby amino groups are mainly exposed to the surface. On the other hand, alkyl groups are mainly exposed to the surface (undesorbed face) covered with the undissociated self-assembling monomolecular film 2. As a consequence, the surface (undesorbed face) covered with the undissociated self-assembling monomolecular film 2 is water-repellent and lipophilic, whereas the surface (desorbed face) covered with the remaining portion 2a of the self-assembling compound alone is hydrophilic and lipophilic. Thus, the surface of the image forming body 4 would partly have different wettabilities. As a consequence, the selective heating by the thermal head 5 can form any printing plate on the surface of the image forming body 4.

Subsequently, at the time when the printing plate passes through the moisture supplying device 9, moisture 9c is supplied to the desorbed face (non-image area) on the surface of the image forming body 4 formed with the printing plate. Then, as the oil ink 11c is supplied to the surface of the image forming body 4 formed with the printing plate when the printing plate passes through the developer 11, an ink image is formed. Since the moisture 9c is attached to the desorbed face (non-image area), the oil ink 11c does not adhere thereto but only adheres to the surface covered with undissociated self-assembling monomolecular film 2 (undesorbed face: image area). Here, the moisture 9 and oil ink 11c are supplied onto the image forming body 4, while their film thickness values are adjusted by the surface roughness of the feeding rollers and applying rollers and by the pressure between the image forming body 4 and the feeding rollers and applying rollers.

Then, the image forming body 4 formed with the ink image is fed to the transfer device 21, where the ink image is transferred from the image forming body 4 to the transfer drum 21c. Also, the recording medium 13 is fed by the paper-feed rollers 21a, along the direction of arrow E, in synchronization with the rotation of the image forming body 4, whereas the recording medium 13 is pressed against the transfer drum 21c by the platen roller 21b. While the recording medium 13 is abutting against the transfer drum 21c, the ink image is transferred from the transfer drum 21c to the recording medium 13. Thereafter, the recording medium 13 having the ink image transferred thereto is ejected along the direction of arrow E (no paper-ejecting mechanism being depicted).

Untransferred ink may remain on the surface of the image forming body 4 and transfer drum 21c that have completed the above-mentioned transfer-printing step. The remaining untransferred ink is scraped off by the ink cleaners 22. The cleaning buffs 22a having scraped off the untransferred ink are taken up by their corresponding take-up shafts 22b. Here, the scraping of untransferred ink is not necessarily be carried out for each but may be effected after a specific number of sheets are printed (e.g., per 5 or 10 sheets) at the copy printing using the same printing plate. The ink cleaners 22 are spaced from the image forming body 4 and transfer drum 21c when not used for scraping off the untransferred ink.

When a plurality of sheets are to be copy-printed for the same image, it is not necessary for the film forming step and printing plate forming step to be re-executed. Hence, the image forming body 4 is fed to the moisture supplying device 9 while holding the printing plate. During this period, the halogen lamp 14 and the thermal head 5 are not heated. Also, it is preferred that, after the heating step or printing plate forming step is complete, the halogen lamp 14 and the thermal head 5 are spaced from the image forming body 4 so that the desorbing portion 2b of the self-assembling compound 2 is not desorbed by their residual heat. Moisture is supplied to the surface of the image forming body 4 by the moisture supplying device 9, and the oil ink 11c is supplied thereto by the developer 11. The re-formed ink image is transferred to the recording medium 13 in the transfer device 21.

After a desired number of sheets are copy-printed, the halogen lamp 14 approaches the drum 1b, thereby heating the whole surface of the image forming body 4. Consequently, as with the reaction shown in Fig. 6, the ionic bond in the heated self-assembling monomolecular film 2 is dissociated, and the desorbing portion 2b of the self-assembling compound 2 is desorbed from the whole surface of the gold film 1a. Subsequently, when printing a new printing pattern, the process is executed from the step of re-forming the self-assembling monomolecular film 2 onto the surface of the gold film 1a. Specifically, after the film forming solution 3 is supplied to the surface of the gold film 1a by the compound supplying device 20a, the gold film 1a is energized by the energizing device 20b, and the surface of the gold film 1a is dried by the fan 20c, so that the remaining portion 2a on the gold film 1a and the desorbing portion 2b in the newly supplied film forming solution 3 rapidly form an ionic bond as shown in Fig. 7, whereby the surface of the gold film 1a can be modified with the undissociated self-assembling monomolecular film 2 again. Then, with the subsequent steps similar to those mentioned above, the new printing pattern can be printed.

**Embodiment 2**

Embodiment 2 differs from Embodiment 1 in the self-assembling compound employed for forming the self-assembling monomolecular film. Specifically, the solution cartridge 201 is filled with an ethanol solution in which 4,4'-aminophenyl disulfide (corresponding to the remaining portion 2a) expressed by the following formula:

$$NH_2\text{-}C_6H_4\text{-}SS\text{-}C_6H_4\text{-}NH_2$$

and heptadecafluoropelargonic acid (corresponding to the desorbing portion 2b) expressed by the following formula:

$$C_8F_{17}COOH$$

have been dissolved.

Also, since the wettability of the self-assembling monomolecular film formed in this embodiment is water- and oil-repellent, the moisture supplying device 9 is unnecessary. As a consequence, an image forming apparatus similar to that of Embodiment 1 except that the moisture supplying device 9 does not exist is employed. In Embodiment 2, however, not only the oil ink but also water ink can be used as the ink 11c.

Operations in the above-mentioned apparatus in Embodiment 2 will now be explained.

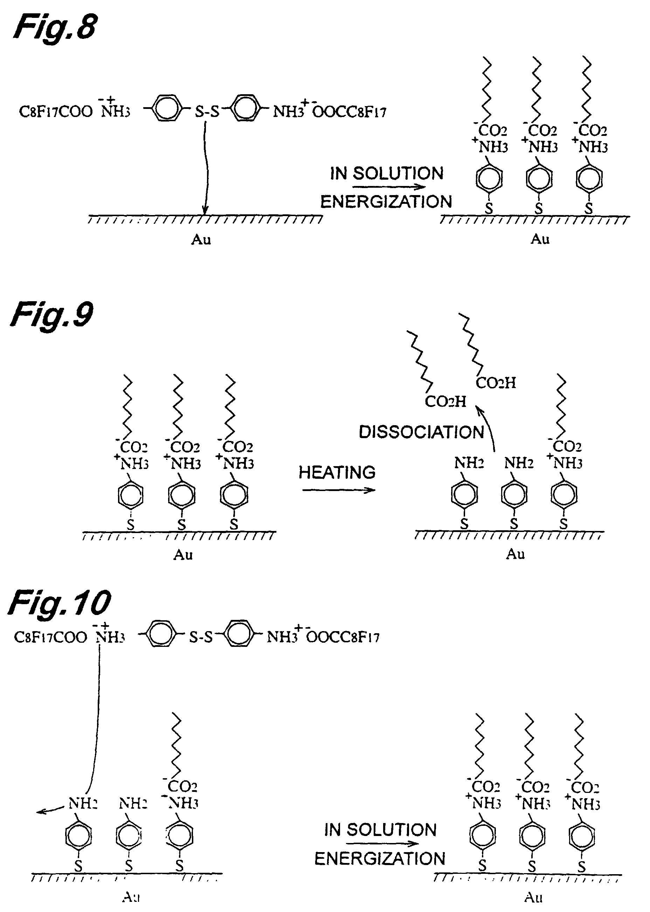

After impurities on the surface of the gold film 1a are eliminated by use of the halogen lamp 14, the film forming solution 3 is supplied to the surface of the gold film 1a by the solution sprayer 202, whereby a part of the self-assembling compound 2 is adsorbed on the surface of the gold film 1a due to its molecular assembling property. Subsequently, when the gold film 1a supplied with the self-assembling compound 2 is energized by the energizing device 20b, the self-assembling compound (thiolate) 2 is rapidly and uniformly arranged on and desorbed to the surface of the gold film 1a as shown in Fig. 8. Then, when the surface of the gold film 1a is dried by the fan 20c, the self-assembling monomolecular film 2 having an ionic bond portion (ion pair) therewithin is uniformly formed on the surface of the dried gold film 1a as shown in the same drawing.

Subsequently, when the thermal head 5 is caused to act on the surface of the gold film 1a uniformly formed with the self-assembling monomolecular film 2, so as to selectively heat the self-assembling monomolecular film 2, the ionic bond in the heated self-assembling monomolecular film 2 is dissociated as shown in Fig. 9, whereby the desorbing portion 2b of the self-assembling compound is selectively desorbed.

The surface (desorbed face) of the gold film 1a from which the desorbing portion (heptadecafluoropelargonic acid) 2b has thus been desorbed becomes a surface covered with the remaining portion (aminophenyl thiolate) 2a of the self-assembling compound alone, whereby amino groups are mainly exposed to the surface. On the other hand, fluoroalkyl groups are mainly exposed to the surface (undesorbed face) covered with the undissociated self-assembling monomolecular film 2. As a consequence, the surface (undesorbed face) covered with the undissociated self-assembling monomolecular film 2 is water- and oil-repellent, whereas the surface (desorbed face) covered with the remaining portion 2a of the self-assembling compound alone is hydrophilic and lipophilic, whereby any printing plate would be formed on the surface of the image forming body 4.

Subsequently, in this embodiment, the printing plate is fed to the developer 11, and the oil or water ink 11c is supplied to the surface of the image forming body 4 formed with the printing plate, whereby an ink image is formed. Since the surface (undesorbed face: non-image area) covered with the undissociated self-assembling monomolecular film 2 is water- and oil-repellent, the oil ink 11c does not adhere thereto but only adheres to the desorbed face (image area). Then, as with Embodiment 1, the ink image is transferred to the recording medium 13 in the transfer device 21.

After the above-mentioned transfer-printing step is complete, as with Embodiment 1, the remaining untransferred ink is scraped off by the ink cleaners 22. When a plurality of sheets are to be copy-printed for the same image, the image forming body 4 is fed to the developer 11 while holding the printing plate, so as to form the ink image again, and the ink image is subsequently transferred to the recording medium 13 in the transfer device 21.

After a desired number of sheets are copy-printed, the halogen lamp 14 heats the whole surface of the image forming body 4, whereby, as with the reaction shown in Fig. 9, the desorbing portion 2b of the self-assembling compound 2 is desorbed from the whole surface of the gold film 1a. Subsequently, when printing a new printing pattern, after the film forming solution 3 is supplied to the surface of the gold film 1a by the compound supplying device 20a, the gold film 1a is energized by the energizing device 20b, and the surface of the gold film 1a is dried by the fan 20c, so that the remaining portion 2a on the gold film 1a and the desorbing portion 2b in the newly supplied film forming solution 3 rapidly form an ionic bond as shown in Fig. 10, whereby the surface of the gold film 1a can be modified with the undissociated self-assembling monomolecular film 2 again. Then, with the subsequent steps similar to those mentioned above, the new printing pattern can be printed.

## Embodiments 3 and 4

Embodiments 3 and 4 differ from Embodiment 1 in the self-assembling compounds employed for forming the self-assembling monomolecular film. Specifically, the solution cartridge 201 in Embodiment 3 is filled with an ethanol solution in which (bis(4-aminophenyl)) sulfide (corresponding to the remaining portion 2a) expressed by the following formula:

$$NH_2\text{-}C_6H_4\text{-}S\text{-}C_6H_4\text{-}NH_2$$

and lauric acid (corresponding to the desorbing portion 2b) expressed by the following formula:

$$C_{11}H_{23}COOH$$

have been dissolved. On the other hand, the solution cartridge 201 in Embodiment 4 is filled with an ethanol solution in which 4-aminothiophenol (corresponding to the remaining portion 2a) expressed by the following formula:

$$NH_2\text{-}C_6H_4\text{-}SH$$

and hexanoic acid (corresponding to the desorbing portion 2b) expressed by the following formula:

$$C_5H_{11}COOH$$

have been dissolved. In Embodiments 3 and 4, an image forming apparatus similar to that in Embodiment 1 is employed.

Operations in the above-mentioned apparatus in Embodiments 3 and 4 will now be explained.

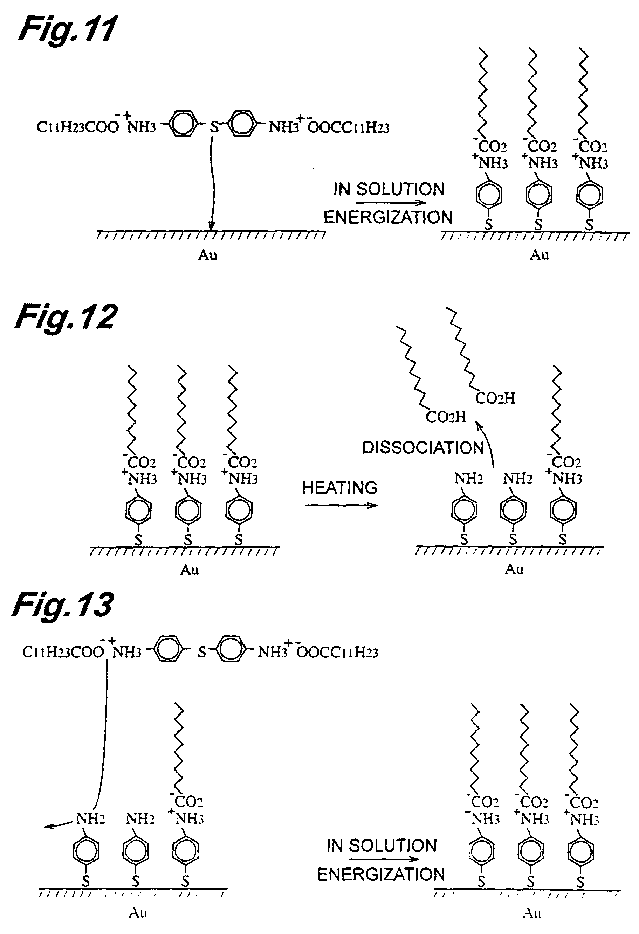

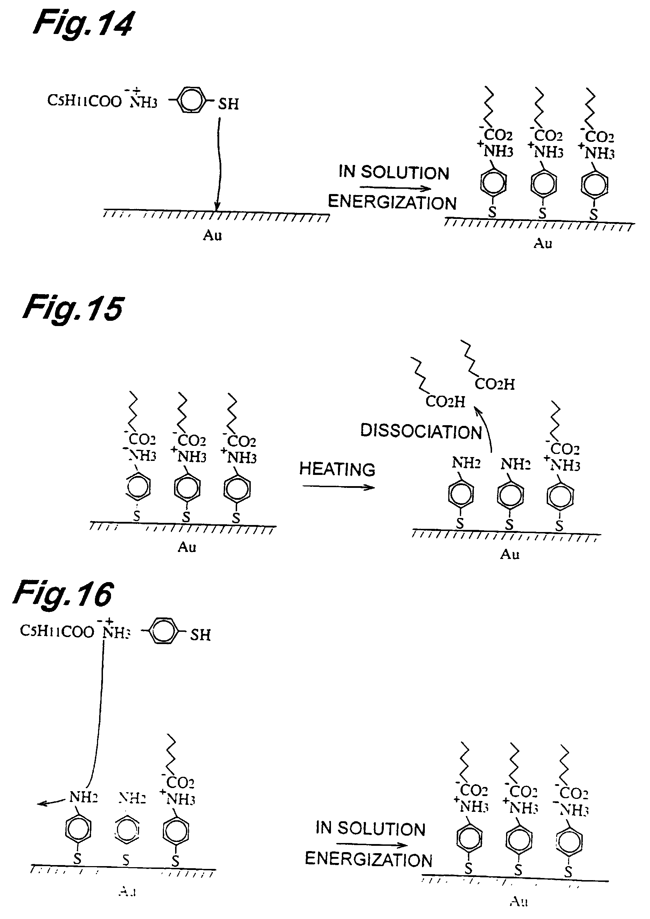

After impurities on the surface of the gold film 1a are eliminated by use of the halogen lamp 14, the film forming solution 3 is supplied to the surface of the gold film 1a by the solution sprayer 202, whereby a part of the self-assembling compound 2 is adsorbed to the surface of the gold film 1a due to its molecular assembling property. Subsequently, when the gold film 1a supplied with the self-assembling compound 2 is energized by the energizing device 20b, the self-assembling compound (thiolate) 2 is rapidly and uniformly arranged on and desorbed to the surface of the gold film 1a as shown in Fig. 11 (Embodiment 3) or Fig. 14 (Embodiment 4). Then, when the surface of the gold film 1a is dried by the fan 20c, the self-assembling monomolecular film 2 having an ionic bond portion (ion pair) therewithin is uniformly formed on the surface of the dried gold film 1a as shown in the same drawing.

Subsequently, when the thermal head 5 is caused to act on the surface of the gold film 1a uniformly formed with the self-assembling monomolecular film 2, so as to selectively heat the self-assembling monomolecular film 2, the ionic bond in the heated self-assembling monomolecular film 2 is dissociated as shown in Fig. 12 (Embodiment 3) or Fig. 15 (Embodiment 4), whereby the desorbing portion 2b of the self-assembling compound is selectively desorbed.

The surface (desorbed face) of the gold film 1a from which the desorbing portion (lauric acid in Embodiment 3, hexanoic acid in Embodiment 4) 2b has thus been desorbed becomes a surface covered with the remaining portion (aminophenyl thiolate) 2a of the self-assembling compound alone, whereby amino groups are mainly exposed to the surface. On the other hand, alkyl groups are mainly exposed to the surface (undesorbed face) covered with the undissociated self-assembling monomolecular film 2. As a consequence, the surface (undesorbed face) covered with the undissociated self-assembling monomolecular film 2 is water-repellent and lipophilic, whereas the surface (desorbed face) covered with the remaining portion 2a of the self-assembling compound alone is hydrophilic and lipophilic, whereby any printing plate would be formed on the surface of the image forming body 4.

Subsequently, in Embodiments 3 and 4, as with Embodiment 1, after the moisture 9c is supplied by the moisture supplying device 9 to the desorbed face (non-image area) on the surface of the image forming body 4 formed with the printing plate, the oil ink 11c is supplied to the surface (undesorbed face: non-image area) of the image forming body 4 covered with the undissociated self-assembling monomolecular film 2 in the developer 11, and the ink image is transferred to the recording medium 13 in the transfer device 21.

After the above-mentioned transfer-printing step is completed, as with Embodiment 1, the remaining untransferred ink is scraped off by the ink cleaners 22. When a plurality of sheets are to be copy-printed for the same image, the image forming body 4 is fed to the moisture supplying device 9 and the developer 11 while holding the printing plate, so as to form the ink image again, and the ink image is subsequently transferred to the recording medium 13 in the transfer device 21.

After a desired number of sheets are copy-printed, the halogen lamp 14 heats the whole surface of the image forming body 4, whereby, as with the reaction shown in Fig. 12 (Embodiment 3) or Fig. 15 (Embodiment 4), the desorbing portion 2b of the self-assembling compound 2 is desorbed from the whole surface of the gold film 1a. Subsequently, when printing a new printing pattern, after the film forming solution 3 is supplied to the surface of the gold film 1a by the compound supplying device 20a, the gold film 1a is energized by the energizing device 20b, and the surface of the gold film 1a is dried by the fan 20c, so that the remaining portion 2a on the gold film 1a and the desorbing portion 2b in the newly supplied film forming solution 3 rapidly form an ionic bond as shown in Fig. 13 (Embodiment 3) or Fig. 16 (Embodiment 4), whereby the surface of the gold film 1a can be modified with the undissociated self-assembling monomolecular film 2 again. Then, with the subsequent steps similar to those mentioned above, the new printing pattern can be printed.

While preferred embodiments of the image forming apparatus in accordance with the present invention are explained in detail in the foregoing, the apparatus of the present invention is not restricted to the above-mentioned embodiments.

For example, the above-mentioned embodiments employ, as the substrate 1 for forming the self-assembling monomolecular film, the drum 1b on which the gold film 1a is deposited. However, as noted, the substrate and self-assembling compound employed in the present invention are not restricted to those mentioned above.

## Examples

In the following, the present invention will be explained in more detail with reference to Examples and Comparative Examples, though the present invention is not limited to the following Examples.

## Example 1

As the substrate of the image forming body used for a printing plate, one in which a gold film (film thickness: 100 nm) had been deposited on an SUS plate (10 mm x 50 mm x 0.1 mm) in vacuum was used. After the gold film surface of the above-mentioned substrate was heated at 350°C for 60 minutes and then washed, the gold film surface was immersed in an ethanol solution (10 ml) in which 4,4'-aminophenyl disulfide ($NH_2$-$C_6H_4$-SS-$C_6H_4$-$NH_2$, corresponding to the remaining portion 2a) (0.05 mM) and lauric acid ($C_{11}H_{23}COOH$, corresponding to the desorbing portion 2b) (0.1 mM) had been dissolved with stirring, and a direct current of 3A was supplied to the substrate itself for 30 seconds in this state by a DC regulated power supply (PR3631, manufactured by Yokogawa Electric Corp.). Then, as shown in Fig. 5, a thiolate compound having an ionic bond portion therewithin was rapidly and uniformly adsorbed to the gold film surface, whereby a self-assembling monomolecular film was formed. Here, the voltage applied upon the energization mentioned above was 0.45 V. Then, the gold film surface formed with the above-mentioned self-assembling monomolecular film was dried with a warm current of air from a fan.

The contact angle of the gold film surface thus formed with the self-assembling monomolecular film shown in Fig. 5 with respect to distilled water was measured at a measurement droplet amount of 0.9 μl with a contact angle meter (type CA-A, manufactured by Kyowa Interface Science Co., Ltd.) and found to be 68°C as shown in Table 1, which contact angle was uniform over the whole surface of the gold film.

Then, while the gold film surface thus formed with the self-assembling monomolecular film shown in Fig. 5 was heated to 250°C and cooled to room temperature thereafter, the contact angle of the gold film surface after heating was measured in a manner similar to that mentioned above and found to be 33°C as shown in Table 1. Since the contact angle thus decreased from 68° to 33° upon heating the gold film surface formed with the self-assembling monomolecular film, it was confirmed that, as shown in Fig. 6, the ionic bond portion in the heated self-assembling monomolecular film was dissociated, so that lauric acid was desorbed from this portion, whereby the wettability of the surface changed from water-repellent to hydrophilic.

Subsequently, the heated gold film surface was immersed in the ethanol solution again and, after a direct current of 3A was supplied to the substrate itself in this state for 30 seconds in a manner similar to that mentioned above, was dried. Then, the contact angle of the gold film surface was measured in a manner similar to that mentioned above and found to be 62°C as shown in Table 1. Since the contact angle was restored to 68°C from 33°C when the substrate was immersed in the ethanol solution again and was energized, it was confirmed that, as shown in Fig. 7, the lauric acid residue in the solution rapidly formed an ionic bond with aminophenyl thiolate on the gold film surface, so as to form an undissociated self-assembling monomolecular film again, whereby the wettability of the surface changed from hydrophilic to water-repellent.

Table 1

|  | Contact angle to distilled water[°] | | |
|---|---|---|---|
|  | Before heating | After heating(250°C) | After remodification |
| Example 1 | 68 | 33 | 62 |
| Example 2 | 79 | 49 | 69 |
| Example 3 | 68 | 32 | 66 |
| Example 4 | 44 | 27 | 41 |
| Example 5 | 52 | 40 | 59 |
| Comp.Ex. 1 | 38 | 16 | 41 |
| Comp.Ex. 2 | 38 | 42 | 48 |
| Comp.Ex. 3 | 52 | 38 | 64 |
| Comp.Ex. 4 | 36 | 32 | 40 |
| Comp.Ex. 5 | 42 | 28 | 39 |

## Example 2

In a manner similar to Example 1 except that an ethanol solution (10 ml) in which 4,4'-aminophenyl disulfide ($NH_2$-$C_6H_4$-SS-$C_6H_4$-$NH_2$, corresponding to the remaining portion 2a) (0.05 mM) and heptadecafluoropelargonic acid ($C_8F_{17}COOH$, corresponding to the desorbing portion 2b) (0.1 mM) had been dissolved was employed in place of the ethanol solution in Example 1 in which 4,4'-aminophenyl disulfide and lauric acid had been dissolved, and that the direct current supplied to the substrate was changed to 2A (the voltage applied to the substrate was 0.3 V), the substrate was immersed in the ethanol solution and was energized. Consequently, as shown in Fig. 8, a thiolate compound having an ionic bond portion therewithin was rapidly and uniformly adsorbed to the gold film surface, whereby a self-assembling monomolecular film was formed.

Subsequently, as with Example 1, the contact angle with respect to distilled water was measured before heating, after heating, and after remodification, whereby the results shown in Table 1 were obtained. Also, each contact angle was uniform over the whole gold film surface.

Thus, since the contact angle decreased from 79°C to 49°C when the gold film surface formed with the self-assembling monomolecular film was heated, it was confirmed that, as shown in Fig. 9, the ionic bond portion in the heated self-assembling monomolecular film was dissociated, and heptadecafluoropelargonic acid was desorbed from this portion, whereby the wettability of the surface changed from water-repellent to hydrophilic.

Also, since the contact angle was restored to 69°C from 49°C when the substrate was immersed in the ethanol solution again and was energized, it was confirmed that, as shown in Fig. 10, the heptafluoropelargoinc acid residue in the solution rapidly formed an ionic bond with aminophenyl thiolate on the gold film surface, so as to form an undissociated self-assembling monomolecular film again, whereby the wettability of the surface changed from hydrophilic to water-repellent.

## Example 3

In a manner similar to Example 1 except that an ethanol solution (10 ml) in which (bis(4-aminophenyl)) sulfide ($NH_2$-$C_6H_4$-S-$C_6H_4$-$NH_2$, corresponding to the remaining portion 2a) (1 mM) and lauric acid ($C_{11}H_{23}COOH$, corresponding to the desorbing portion 2b) (1 mM) had been dissolved was employed in place of the ethanol solution in Example 1 in which 4,4'-aminophenyl disulfide and lauric acid had been dissolved, the substrate was immersed in the ethanol solution and was energized. Consequently, as shown in Fig. 11, a thiolate compound having an ionic bond portion therewithin was rapidly and uniformly adsorbed to the gold film surface, whereby a self-assembling monomolecular film was formed.

Subsequently, as with Example 1, the contact angle with respect to distilled water was measured before heating, after heating, and after remodification, whereby the results shown in Table 1 were obtained. Also, each contact angle was uniform over the whole gold film surface.

Thus, since the contact angle decreased from 68°C to 32°C when the gold film surface formed with the self-assembling monomolecular film was heated, it was confirmed that, as shown in Fig. 12, the ionic bond portion in the heated self-assembling monomolecular film was dissociated, and lauric acid was desorbed from this portion, whereby the wettability of the surface changed from water-repellent to hydrophilic.

Also, since the contact angle was restored to 66°C from 32°C when the substrate was immersed in the ethanol solution again and was energized, it was confirmed that, as shown in Fig. 13, the lauric acid residue in the solution rapidly formed an ionic bond with aminophenyl thiolate on the gold film surface, so as to form an undissociated self-assembling monomolecular film again, whereby the wettability of the surface changed from hydrophilic to water-repellent.

## Example 4

In a manner similar to Example 1 except that an ethanol solution (10 ml) in which 4-aminothiophenol ($NH_2$-$C_6H_4$-SH, corresponding to the remaining portion 2a) (0.1 mM) and hexanoic acid ($C_5H_{11}COOH$, corresponding to the desorbing portion 2b) (0.1 mM) had been dissolved was employed in place of the ethanol solution in Example 1 in which 4,4'-aminophenyl disulfide and lauric acid had been dissolved, the substrate was immersed in the ethanol solution and was energized. Consequently, as shown in Fig. 14, a thiolate compound having an ionic bond portion therewithin was rapidly and uniformly adsorbed to the gold film surface, whereby a self-assembling monomolecular film was formed.

Subsequently, as with Example 1, the contact angle with respect to distilled water was measured before heating, after heating, and after remodification, whereby the results shown in Table 1 were obtained. Also, each contact angle was uniform over the whole gold film surface.

Thus, since the contact angle decreased from 44°C to 27°C when the gold film surface formed with the self-assembling monomolecular film was heated, it was confirmed that, as shown in Fig. 15, the ionic bond portion in the heated self-assembling monomolecular film was dissociated, and hexanoic acid was desorbed from this portion, whereby the wettability of the surface changed from water-repellent to hydrophilic.

Also, since the contact angle was restored to 41°C from 27°C when the substrate was immersed in the ethanol solution again and was energized, it was confirmed that, as shown in Fig. 16, the hexanoic acid residue in the solution rapidly formed an ionic bond with aminophenyl thiolate on the gold film surface, so as to form an undissociated self-assembling monomolecular film again, whereby the wettability of the surface changed from hydrophilic to water-repellent.

### Example 5

In a manner similar to Example 1 except that the direct current supplied to the substrate was changed to 0.5 A (the voltage applied to the substrate was 0.07 V), the substrate was immersed in the ethanol solution and was energized. Consequently, as shown in Fig. 5, a thiolate compound having an ionic bond portion therewithin was rapidly and uniformly adsorbed to the gold film surface, whereby a self-assembling monomolecular film was formed.

Subsequently, as with Example 1, the contact angle with respect to distilled water was measured before heating, after heating, and after remodification, whereby the results shown in Table 1 were obtained. Also, each contact angle was uniform over the whole gold film surface.

Thus, since the contact angle decreased from 52°C to 40°C when the gold film surface formed with the self-assembling monomolecular film was heated, it was confirmed that, as shown in Fig. 6, the ionic bond portion in the heated self-assembling monomolecular film was dissociated, and lauric acid was desorbed from this portion, whereby the wettability of the surface changed from water-repellent to hydrophilic.

Also, since the contact angle was restored to 59°C from 40°C when the substrate was immersed in the ethanol solution again and was energized, it was confirmed that, as shown in Fig. 7, the lauric acid residue in the solution rapidly formed an ionic bond with aminophenyl thiolate on the gold film surface, so as to form an undissociated self-assembling monomolecular film again, whereby the wettability of the surface changed from hydrophilic to water-repellent.

### Comparative Examples 1 to 4

In respective manners similar to Examples 1 to 4 except that the gold film surface was not energized when the self-assembling compound was supplied thereto, substrates formed with their respective self-assembling monomolecular films were obtained. Here, Comparative Examples 1 to 4 correspond to Examples 1 to 4, respectively. Subsequently, as with Example 1, the contact angle with respect to distilled water was measured before heating, after heating, and after remodification. The thus obtained results are shown in Table 1.

As can be seen from the results shown in Table 1, it was confirmed that the speed at which the self-assembling compound was adsorbed to the gold film improved in the cases where the substrate itself was energized when the self-assembling compound was supplied thereto (Examples 1 to 4), as compared with the cases without energization (Comparative Examples 1 to 4), so that the self-assembling monomolecular film in which the self-assembling compound was uniformly arranged was efficiently formed and re-formed in a shorter time.

### Comparative Example 5

A substrate formed with a self-assembling monomolecular film was obtained in a manner similar to Example 5 except for such a setting that a platinum electrode was disposed in the ethanol solution so as to be distanced from the gold film surface by 5 mm, the anode of the power supply was connected to the gold film, whereas the cathode was connected to the platinum electrode, and a direct current of 2 A was caused to flow from the gold film to the platinum electrode for 30 seconds when the self-assembling compound was supplied. Here, upon the energization mentioned above, no current flowed between the gold film and the platinum electrode. Subsequently, as with Example 1, the contact angle with respect to distilled water was measured before heating, after heating, and after remodification. The thus obtained results are shown in Table 1.

As can be seen from the results shown in Table 1, in the case where the gold film and the platinum electrode were employed as an anode and a cathode, respectively, and a current was caused to flow from the gold film to the platinum electrode when the self-assembling compound was supplied (Comparative Example 5), the self-assembling compound was adsorbed to the gold film surface only as much as that in the case without energization (Comparative Example 1), whereby no improvement due to such energization was seen in the speed at which the self-assembling compound was adsorbed to the gold film surface.

**Industrial Applicability**

As explained in the foregoing, in the method of forming a self-assembling monomolecular film, image forming apparatus, image forming method, and platemaking method in accordance with the present invention, when the self-assembling compound is supplied to the substrate surface, the substrate itself is energized by an energizing device comprising a power source having one terminal connected to one end of the substrate and the other terminal connected to the other end of the substrate, whereby the speed at which the self-assembling compound is adsorbed on the substrate surface improves, so that the self-assembling monomolecular film in which the self-assembling compound is uniformly arranged can be obtained efficiently and reliably in a shorter time as compared with the case without energization. Therefore, in accordance with the present invention, the time required for making the image forming body employed as the printing plate can be shortened, so as to realize higher-speed printing.

In addition, in accordance with the present invention, since the self-assembling compound is reliably and uniformly arranged on the substrate surface in a short time, print smudges are sufficiently prevented from occurring due to the substrate surface (defect portions of the monomolecular film) not covered (modified) with the self-assembling monomolecular film, whereby higher-resolution printing can be realized.

Also, in accordance with the present invention, the speed at which the self-assembling compound is adsorbed to the substrate surface from which a part of the self-assembling compound has been desorbed improves, whereby the self-assembling monomolecular film can be re-formed (remodified) efficiently and reliably in a short time.

Also, in the present invention, the same printing plate can be used repeatedly, so that it is unnecessary to form a latent image for each sheet as required in the conventional electrophotographic printer, whereby high-speed printing is possible.

Further, in the present invention, the same image forming body can repeatedly be used for a plurality of images. Therefore, it does not necessitate complicated devices and processes such as discarding a stencil and winding a new stencil, which have been required in the conventional mimeograph printer. Hence, higher-speed image formation is made possible with a small-size, simple apparatus, while realizing a lower running cost at the time of copy-printing a small number of sheets with the same original.

Also, since the image forming body in accordance with the present invention is formed by a self-assembling monomolecular film, individual bonds between molecules are controlled so as to form a plate. As a consequence, in accordance with the present invention, edge characteristics of the plate become favorable, and an image printing plate having a higher resolution can be formed, whereby higher-resolution printing is possible.

**Claims**

1. An image forming apparatus comprising:

   a conductive substrate;
   a first compound supplying device for supplying a surface of said substrate with a self-assembling compound adapted to be adsorbed on the surface of said substrate and form a self-assembling monomolecular film;
   a first energizing device, comprising a power source having one terminal connected to one end of said substrate and the other terminal connected to the other end of said substrate, for energizing said substrate when said self-assembling compound is supplied to the surface of said substrate, so as to form the self-assembling monomolecular film, thereby yielding an image forming body comprising said substrate and said self-assembling compound;
   a first desorbing device for selectively desorbing from said image forming body at least a part of the self-assembling compound forming said self-assembling monomolecular film, so as to provide a surface of said image forming body with a desorbed face and an undesorbed face which have wettabilities different from each other;
   a developing device for supplying the surface of said image forming body with ink which preferentially attaches to said desorbed face or undesorbed face; and
   a transfer device for transferring to a recording medium the ink attached to the surface of said image forming body.

2. The apparatus according to claim 1, wherein said self-assembling compound has an adsorptive functional group adapted to be adsorbed on the surface of said substrate, at least one hydrocarbon residue combined with said adsorptive functional group, at least one ionic bond portion, and at least one aliphatic compound residue combined with said hydrocarbon residue by way of said ionic bond portion, said self-assembling compound being adapted to spontaneously form a substantially uniform adsorption film of a monomolecular layer on the surface of said substrate.

3. The apparatus according to claim 1, wherein said self-assembling compound is at least one compound selected from the group consisting of:

a disulfide compound expressed by the following general formula (1):

$$R^3\text{-}X^1\text{-}R^1\text{-}S\text{-}S\text{-}R^2\text{-}X^2\text{-}R^4 \tag{1}$$

where, in expression (1), $R^1$ and $R^2$ may be identical or different from each other, each indicating a hydrocarbon residue selected from the group consisting of alkylene groups having a carbon number of 1 to 15, aliphatic cyclic hydrocarbon residues having a carbon number of 3 to 6, and aromatic hydrocarbon residues; $X^1$ and $X^2$ may be identical or different from each other, each indicating an ionic bond portion selected from the group consisting of $\text{-COO}^{-+}\text{H}_3\text{N-}$ and $\text{-O}^{-+}\text{HN=N-}$; and $R^3$ and $R^4$ may be identical or different from each other, each indicating an aliphatic compound residue selected from the group consisting of alkyl residues having a carbon number of 1 to 22 and halogen-substituted aliphatic compound residues having a carbon number of 1 to 22;

a sulfide compound expressed by the following general formula (2):

$$R^7\text{-}X^3\text{-}R^5\text{-}S\text{-}R^6\text{-}X^4\text{-}R^8 \tag{2}$$

where, in expression (2), $R^5$ and $R^6$ may be identical or different from each other, each indicating a hydrocarbon residue selected from the group consisting of alkylene groups having a carbon number of 1 to 15, aliphatic cyclic hydrocarbon residues having a carbon number of 3 to 6, and aromatic hydrocarbon residues; $X^3$ and $X^4$ may be identical or different from each other, each indicating an ionic bond portion selected from the group consisting of $\text{-COO}^{-+}\text{H}_3\text{N-}$ and $\text{-O}^{-+}\text{HN=N-}$; and $R^7$ and $R^8$ may be identical or different from each other, each indicating an aliphatic compound residue selected from the group consisting of alkyl residues having a carbon number of 1 to 22 and halogen-substituted aliphatic compound residues having a carbon number of 1 to 22; and

a thiol compound expressed by the following general formula (3):

$$H\text{-}S\text{-}R^9\text{-}X^5\text{-}R^{10} \tag{3}$$

where, in expression (3), $R^9$ indicates a hydrocarbon residue selected from the group consisting of alkylene groups having a carbon number of 1 to 15, aliphatic cyclic hydrocarbon residues having a carbon number of 3 to 6, and aromatic hydrocarbon residues; $X^5$ indicates an ionic bond portion selected from the group consisting of $\text{-COO}^{-+}\text{H}_3\text{N-}$ and $\text{-O}^{-+}\text{HN=N-}$; and $R^{10}$ indicates an aliphatic compound residue selected from the group consisting of alkyl residues having a carbon number of 1 to 22 and halogen-substituted aliphatic compound residues having a carbon number of 1 to 22.

4. The apparatus according to claim 1, further comprising:

a second compound supplying device for supplying the surface of said image forming body with said self-assembling compound again; and
a second energizing device for energizing said substrate when said self-assembling compound is supplied to the surface of said image forming body, so as to form said self-assembling monomolecular film on said desorbed face again.

5. The apparatus according to claim 4, further comprising a second desorbing device for desorbing the self-assembling compound forming said undesorbed face from said image forming body, so as to cause the whole surface of said image forming body to become the desorbed face.

6. The apparatus according to claim 1, further comprising a moisture supplying device which supplies, before said ink is supplied, the surface of said image forming body with moisture which preferentially attaches to said desorbed face or undesorbed face.

7. An image forming method including:

a first compound supplying step of supplying a surface of a conductive substrate with a self-assembling compound adapted to be adsorbed on the surface of said substrate and form a self-assembling monomolecular film;

a first energizing step of energizing said substrate when said self-assembling compound is supplied to the surface of said substrate with an energizing device comprising a power source having one terminal connected to one end of said substrate and the other terminal connected to the other end of said substrate, so as to form the self-assembling monomolecular film, thereby yielding an image forming body comprising said substrate and said self-assembling compound;

a first desorbing step of selectively desorbing from said image forming body at least a part of the self-assembling compound forming said self-assembling monomolecular film, so as to provide a surface of said image forming body with a desorbed face and an undesorbed face which have wettabilities different from each other;

a developing step of supplying the surface of said image forming body with ink which preferentially attaches to said desorbed face or undesorbed face; and

a transfer step of transferring to a recording medium the ink attached to the surface of said image forming body.

8. The method according to claim 7, wherein said self-assembling compound has an adsorptive functional group adapted to be adsorbed to the surface of said substrate, at least one hydrocarbon residue combined with said adsorptive functional group, at least one ionic bond portion, and at least one aliphatic compound residue combined with said hydrocarbon residue by way of said ionic bond portion, said self-assembling compound being adapted to spontaneously form a substantially uniform adsorption film of a monomolecular layer on the surface of said substrate.

9. The method according to claim 7, wherein said self-assembling compound is at least one compound selected from the group consisting of:

a disulfide compound expressed by the following general formula (1):

$$R^3\text{-}X^1\text{-}R^1\text{-}S\text{-}S\text{-}R^2\text{-}X^2\text{-}R^4 \tag{1}$$

where, in expression (1), $R^1$ and $R^2$ may be identical or different from each other, each indicating a hydrocarbon residue selected from the group consisting of alkylene groups having a carbon number of 1 to 15, aliphatic cyclic hydrocarbon residues having a carbon number of 3 to 6, and aromatic hydrocarbon residues; $X^1$ and $X^2$ may be identical or different from each other, each indicating an ionic bond portion selected from the group consisting of -COO$^{-+}$H$_3$N- and -O$^{-+}$HN=N-; and $R^3$ and $R^4$ may be identical or different from each other, each indicating an aliphatic compound residue selected from the group consisting of alkyl residues having a carbon number of 1 to 22 and halogen-substituted aliphatic compound residues having a carbon number of 1 to 22;

a sulfide compound expressed by the following general formula (2):

$$R^7\text{-}X^3\text{-}R^5\text{-}S\text{-}R^6\text{-}X^4\text{-}R^8 \tag{2}$$

where, in expression (2), $R^5$ and $R^6$ may be identical or different from each other, each indicating a hydrocarbon residue selected from the group consisting of alkylene groups having a carbon number of 1 to 15, aliphatic cyclic hydrocarbon residues having a carbon number of 3 to 6, and aromatic hydrocarbon residues; $X^3$ and $X^4$ may be identical or different from each other, each indicating an ionic bond portion selected from the group consisting of -COO$^{-+}$H$_3$N- and -O$^{-+}$HN=N-; and $R^7$ and $R^8$ may be identical or different from each other, each indicating an aliphatic compound residue selected from the group consisting of alkyl residues having a carbon number of 1 to 22 and halogen-substituted aliphatic compound residues having a carbon number of 1 to 22; and

a thiol compound expressed by the following general formula (3):

$$H\text{-}S\text{-}R^9\text{-}X^5\text{-}R^{10} \tag{3}$$

where, in expression (3), $R^9$ indicates a hydrocarbon residue selected from the group consisting of alkylene groups having a carbon number of 1 to 15, aliphatic cyclic hydrocarbon residues having a carbon number of 3 to 6, and aromatic hydrocarbon residues; $X^5$ indicates an ionic bond portion selected from the group consisting of -COO$^{-+}$H$_3$N- and -O$^{-+}$HN=N-; and $R^{10}$ indicates an aliphatic compound residue selected from the group consisting of alkyl residues having a carbon number of 1 to 22 and halogen-substituted aliphatic compound residues having a carbon number of 1 to 22.

10. The method according to claim 7, further including:

a second compound supplying step of supplying the surface of said image forming body with said self-assembling compound again; and

a second energizing step of energizing said substrate when said self-assembling compound is supplied to the surface of said image forming body, so as to form the self-assembling monomolecular film on said desorbed face again.

**11.** The method according to claim 10, further including a second desorbing step of desorbing the self-assembling compound forming said undesorbed face from said image forming body, so as to cause the whole surface of said image forming body to become the desorbed face.

**12.** The method according to claim 7, further including a moisture supplying step of supplying, before said ink is supplied, the surface of said image forming body with moisture which preferentially attaches to said desorbed face or undesorbed face.

**13.** A platemaking method including:

a compound supplying step of supplying a surface of a conductive substrate with a self-assembling compound adapted to be adsorbed to the surface of said substrate and form a self-assembling monomolecular film;

an energizing step of energizing said substrate when said self-assembling compound is supplied to the surface of said substrate with an energizing device comprising a power source having one terminal connected to one end of said substrate and the other terminal connected to the other end of said substrate, so as to form the self-assembling monomolecular film, thereby yielding an image forming body comprising said substrate and said self-assembling compound; and

a desorbing step of selectively desorbing from said image forming body at least a part of the self-assembling compound forming said self-assembling monomolecular film, so as to provide a surface of said image forming body with a desorbed face and an undesorbed face which have wettabilities different from each other, thereby yielding a printing plate.

**14.** The method according to claim 13, wherein said self-assembling compound has an adsorptive functional group adapted to be adsorbed to the surface of said substrate, at least one hydrocarbon residue combined with said adsorptive functional group, at least one ionic bond portion, and at least one aliphatic compound residue combined with said hydrocarbon residue by way of said ionic bond portion, said self-assembling compound being adapted to spontaneously form a substantially uniform adsorption film of a monomolecular layer on the surface of said substrate.

**15.** The method according to claim 13, wherein said self-assembling compound is at least one compound selected from the group consisting of:

a disulfide compound expressed by the following general formula (1):

$$R^3\text{-}X^1\text{-}R^1\text{-}S\text{-}S\text{-}R^2\text{-}X^2\text{-}R^4 \tag{1}$$

where, in expression (1), $R^1$ and $R^2$ may be identical or different from each other, each indicating a hydrocarbon residue selected from the group consisting of alkylene groups having a carbon number of 1 to 15, aliphatic cyclic hydrocarbon residues having a carbon number of 3 to 6, and aromatic hydrocarbon residues; $X^1$ and $X^2$ may be identical or different from each other, each indicating an ionic bond portion selected from the group consisting of $-COO^{-+}H_3N\text{-}$ and $-O^{-+}HN=N\text{-}$; and $R^3$ and $R^4$ may be identical or different from each other, each indicating an aliphatic compound residue selected from the group consisting of alkyl residues having a carbon number of 1 to 22 and halogen-substituted aliphatic compound residues having a carbon number of 1 to 22;

a sulfide compound expressed by the following general formula (2):

$$R^7\text{-}X^3\text{-}R^5\text{-}S\text{-}R^6\text{-}X^4\text{-}R^8 \tag{2}$$

where, in expression (2), $R^5$ and $R^6$ may be identical or different from each other, each indicating a hydrocarbon residue selected from the group consisting of alkylene groups having a carbon number of 1 to 15, aliphatic cyclic hydrocarbon residues having a carbon number of 3 to 6, and aromatic hydrocarbon residues; $X^3$ and $X^4$ may be identical or different from each other, each indicating an ionic bond portion selected from the group consisting of $-COO^{-+}H_3N\text{-}$ and $-O^{-+}HN=N\text{-}$; and $R^7$ and $R^8$ may be identical or different from each other, each indicating an aliphatic compound residue selected from the group consisting of alkyl residues having a carbon number of 1 to 22 and halogen-substituted aliphatic compound residues having a carbon number of 1 to 22; and

a thiol compound expressed by the following general formula (3);

$$H\text{-}S\text{-}R^9\text{-}X^5\text{-}R^{10} \tag{3}$$

where, in expression (3), $R^9$ indicates a hydrocarbon residue selected from the group consisting of alkylene groups having a carbon number of 1 to 15, aliphatic cyclic hydrocarbon residues having a carbon number of 3 to 6, and aromatic hydrocarbon residues; $X^5$ indicates an ionic bond portion selected from the group consisting of $-COO^{-+}H_3N-$ and $-O^{-+}HN=N-$; and $R^{10}$ indicates an aliphatic compound residue selected from the group consisting of alkyl residues having a carbon number of 1 to 22 and halogen-substituted aliphatic compound residues having a carbon number of 1 to 22].

**16.** A method of forming a self-assembling monomolecular film, said method including:

a compound supplying step of supplying a surface of a conductive substrate with a self-assembling compound adapted to be adsorbed to the surface of said substrate and form the self-assembling monomolecular film; and
an energizing step of energizing said substrate when said self-assembling compound is supplied to the surface of said substrate with an energizing device comprising a power source having one terminal connected to one end of said substrate and the other terminal connected to the other end of said substrate, so as to form the self-assembling monomolecular film.

**17.** The method according to claim 16, wherein said self-assembling compound has an adsorptive functional group adapted to be adsorbed on the surface of said substrate, at least one hydrocarbon residue combined with said adsorptive functional group, at least one ionic bond portion, and at least one aliphatic compound residue combined with said hydrocarbon residue by way of said ionic bond portion, said self-assembling compound being adapted to spontaneously form a substantially uniform adsorption film of a monomolecular layer on the surface of said substrate.

**18.** The method according to claim 16, wherein said self-assembling compound is at least one compound selected from the group consisting of:

a disulfide compound expressed by the following general formula (1):

$$R^3\text{-}X^1\text{-}R^1\text{-}S\text{-}S\text{-}R^2\text{-}X^2\text{-}R^4 \tag{1}$$

where, in expression (1), $R^1$ and $R^2$ may be identical or different from each other, each indicating a hydrocarbon residue selected from the group consisting of alkylene groups having a carbon number of 1 to 15, aliphatic cyclic hydrocarbon residues having a carbon number of 3 to 6, and aromatic hydrocarbon residues; $X^1$ and $X^2$ may be identical or different from each other, each indicating an ionic bond portion selected from the group consisting of $-COO^{-+}H_3N-$ and $-O^{-+}HN=N-$; and $R^3$ and $R^4$ may be identical or different from each other, each indicating an aliphatic compound residue selected from the group consisting of alkyl residues having a carbon number of 1 to 22 and halogen-substituted aliphatic compound residues having a carbon number of 1 to 22;
a sulfide compound expressed by the following general formula (2):

$$R^7\text{-}X^3\text{-}R^5\text{-}S\text{-}R^6\text{-}X^4\text{-}R^8 \tag{2}$$

where, in expression (2), $R^5$ and $R^6$ may be identical or different from each other, each indicating a hydrocarbon residue selected from the group consisting of alkylene groups having a carbon number of 1 to 15, aliphatic cyclic hydrocarbon residues having a carbon number of 3 to 6, and aromatic hydrocarbon residues; $X^3$ and $X^4$ may be identical or different from each other, each indicating an ionic bond portion selected from the group consisting of $-COO^{-+}H_3N-$ and $-O^{-+}HN=N-$; and $R^7$ and $R^8$ may be identical or different from each other, each indicating an aliphatic compound residue selected from the group consisting of alkyl residues having a carbon number of 1 to 22 and halogen-substituted aliphatic compound residues having a carbon number of 1 to 22; and
a thiol compound expressed by the following general formula (3):

$$H-S-R^9-X^5-R^{10} \tag{3}$$

where, in expression (3), $R^9$ indicates a hydrocarbon residue selected from the group consisting of alkylene groups having a carbon number of 1 to 15, aliphatic cyclic hydrocarbon residues having a carbon number of 3 to 6, and aromatic hydrocarbon residues; $X^5$ indicates an ionic bond portion selected from the group consisting of $-COO^{-+}H_3N-$ and $-O^{-+}HN=N-$; and $R^{10}$ indicates an aliphatic compound residue selected from the group consisting of alkyl residues having a carbon number of 1 to 22 and halogen-substituted aliphatic compound residues having a carbon number of 1 to 22.

*Fig.1*

SUBSTRATE

SUPPLY/RE-SUPPLY
SELF-ASSEMBLING COMPOUND
(1ST COMPOUND SUPPLYING STEP/
2ND COMPOUND SUPPLYING STEP) — S101a ⎫
                                        ⎬ S101
ENERGIZE SUBSTRATE
(ENERGIZING STEP) — S101b ⎭

WASH/DRY — S102

SELECTIVELY DESORB
SELF-ASSEMBLING COMPOUND
(1ST DESORBING(PRINTING PLATE
FORMING)STEP) — S103

SUPPLY MOISTURE ONTO
PRINTING PLATE
(MOISTURE SUPPLYING STEP) — S104

SUPPLY INK ONTO
PRINTING PLATE
(DEVELOPING(INK IMAGE
FORMING)STEP) — S105

TRANSFER TO RECORDING
MEDIUM(TRANSFER
(PRINTING)STEP) — S106

ELIMINATE
UNTRANSFERRED INK — S107

PRINTING OF
DESIRED NUMBER OF SHEETS
COMPLETED? — No

Yes

DESORB
SELF-ASSEMBLING COMPOUND
FROM WHOLE SURFACE
(2ND DESORBING STEP) — S108

B

A

Fig.2A

Fig.2B

Fig.2D

Fig.2C

Fig.2E

Fig.2F

Fig.2G

*Fig.3*

# Fig.4

## Fig.5

C11H23COO⁻⁺NH3 —◯— S-S —◯— NH3⁺ ⁻OOCC11H23

IN SOLUTION
⟶
ENERGIZATION

Au

Au

## Fig.6

⁻CO2
⁺NH3

HEATING
⟶

CO2H

CO2H

DISSOCIATION

NH2    NH2    ⁻CO2
⁺NH3

Au

Au

## Fig.7

C11H23COO⁻⁺NH3 —◯— S-S —◯— NH3⁺ ⁻OOCC11H23

NH2    NH2    ⁻CO2
⁻NH3

IN SOLUTION
⟶
ENERGIZATION

⁻CO2    ⁻CO2    ⁻CO2
⁺NH3    ⁺NH3    ⁺NH3

Au

Au

## *Fig.8*

C8F17COO $^-$$^+$NH3 —⟨O⟩— S-S —⟨O⟩— NH3$^+$$^-$OOCC8F17

IN SOLUTION
ENERGIZATION
→

$^-$CO2  $^-$CO2  $^-$CO2
$^+$NH3  $^+$NH3  $^+$NH3

Au                    Au

## *Fig.9*

HEATING
→

DISSOCIATION

CO2H     CO2H

NH2  NH2  $^-$CO2
$^+$NH3

$^-$CO2  $^-$CO2  $^-$CO2
$^+$NH3  $^+$NH3  $^+$NH3

Au                    Au

## *Fig.10*

C8F17COO $^-$$^+$NH3 —⟨O⟩— S-S —⟨O⟩— NH3$^+$$^-$OOCC8F17

NH2  NH2  $^-$CO2
$^-$NH3

IN SOLUTION
ENERGIZATION
→

$^-$CO2  $^-$CO2  $^-$CO2
$^+$NH3  $^+$NH3  $^+$NH3

Au                    Au

# Fig.11

$C_{11}H_{23}COO^- {}^+NH_3$ —⬡— $S$ —⬡— $NH_3^+ {}^-OOCC_{11}H_{23}$

$\overset{IN\ SOLUTION}{\underset{ENERGIZATION}{\longrightarrow}}$

Au | Au

# Fig.12

$\overset{HEATING}{\longrightarrow}$

DISSOCIATION

$CO_2H$ $CO_2H$

Au | Au

# Fig.13

$C_{11}H_{23}COO^- {}^+NH_3$ —⬡— $S$ —⬡— $NH_3^+ {}^-OOCC_{11}H_{23}$

$\overset{IN\ SOLUTION}{\underset{ENERGIZATION}{\longrightarrow}}$

Au | Au

## *Fig.14*

$C_5H_{11}COO^- {}^+NH_3$ ⟨⟩—SH

IN SOLUTION
ENERGIZATION →

$-CO_2$ $-CO_2$ $-CO_2$
$^+NH_3$ $^+NH_3$ $^+NH_3$

Au                          Au

## *Fig.15*

$-CO_2$ $-CO_2$ $-CO_2$
$^-NH_3$ $^+NH_3$ $^+NH_3$

HEATING →

DISSOCIATION

$CO_2H$
$CO_2H$

$NH_2$   $NH_2$   $-CO_2$
                  $^+NH_3$

Au                          Au

## *Fig.16*

$C_5H_{11}COO^- {}^+NH_3$ ⟨⟩—SH

← $NH_2$   $NH_2$   $-CO_2$
                    $^+NH_3$

Au

IN SOLUTION
ENERGIZATION →

$-CO_2$ $-CO_2$ $-CO_2$
$^+NH_3$ $^+NH_3$ $^-NH_3$

Au

## INTERNATIONAL SEARCH REPORT

International application No.

PCT/JP99/01966

A. CLASSIFICATION OF SUBJECT MATTER
Int.Cl⁶ B41C1/10, B41N1/14, B41M1/06

According to International Patent Classification (IPC) or to both national classification and IPC

B. FIELDS SEARCHED

Minimum documentation searched (classification system followed by classification symbols)
Int.Cl⁶ B41C1/10, B41N1/14, B41M1/06

Documentation searched other than minimum documentation to the extent that such documents are included in the fields searched

| Jitsuyo Shinan Koho | 1940-1992 | Toroku Jitsuyo Shinan Koho | 1994-1999 |
| Kokai Jitsuyo Shinan Koho | 1971-1999 | Jitsuyo Shinan Toroku Koho | 1996-1999 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP, 63-144070, A (Mitsubishi Heavy Industries,Ltd.), 16 June, 1988 (16. 06. 88) (Family: none) | 1-18 |

| ☐ | Further documents are listed in the continuation of Box C. | ☐ | See patent family annex. |

\*    Special categories of cited documents:
"A"  document defining the general state of the art which is not considered to be of particular relevance
"E"  earlier document but published on or after the international filing date
"L"  document which may throw doubts on priority claim(s) or which is cited to establish the publication date of another citation or other special reason (as specified)
"O"  document referring to an oral disclosure, use, exhibition or other means
"P"  document published prior to the international filing date but later than the priority date claimed

"T"  later document published after the international filing date or priority date and not in conflict with the application but cited to understand the principle or theory underlying the invention
"X"  document of particular relevance; the claimed invention cannot be considered novel or cannot be considered to involve an inventive step when the document is taken alone
"Y"  document of particular relevance; the claimed invention cannot be considered to involve an inventive step when the document is combined with one or more other such documents, such combination being obvious to a person skilled in the art
"&"  document member of the same patent family

| Date of the actual completion of the international search | Date of mailing of the international search report |
|---|---|
| 6 July, 1999 (06. 07. 99) | 13 July, 1999 (13. 07. 99) |

| Name and mailing address of the ISA/ | Authorized officer |
|---|---|
| Japanese Patent Office | |
| Facsimile No. | Telephone No. |

Form PCT/ISA/210 (second sheet) (July 1992)